(19) Europäisches Patentamt
European Patent Office
Office européen des brevets

(11) **EP 2 738 716 A2**

(12) **EUROPEAN PATENT APPLICATION**

(43) Date of publication:
04.06.2014 Bulletin 2014/23

(51) Int Cl.:
*G06N 7/00* (2006.01)

(21) Application number: 13195149.3

(22) Date of filing: 29.11.2013

(84) Designated Contracting States:
AL AT BE BG CH CY CZ DE DK EE ES FI FR GB GR HR HU IE IS IT LI LT LU LV MC MK MT NL NO PL PT RO RS SE SI SK SM TR
Designated Extension States:
BA ME

(30) Priority: 30.11.2012 US 201213690071

(71) Applicant: Xerox Corporation
Rochester, New York 14644 (US)

(72) Inventors:
• Guo, Shengbo
38400 Saint-martin-d'heres (FR)
• Chidlovskii, Boris
38240 Meylan (FR)
• Archambeau, Cedric
38000 Grenoble (FR)
• Bouchard, Guillaume
38950 Saint-martin-le-vinoux (FR)
• Yin, Dawei
Bethlehem, PA Pennsylvania 18015 (US)

(74) Representative: Skone James, Robert Edmund
Gill Jennings & Every LLP
The Broadgate Tower
20 Primrose Street
London EC2A 2ES (GB)

(54) **Probabilistic relational data analysis**

(57) A multi-relational data set is represented by a probabilistic multi-relational data model in which each entity of the multi-relational data set is represented by a D-dimensional latent feature vector. The probabilistic multi-relational data model is trained using a collection of observations of relations between entities of the multi-relational data set. The collection of observations includes observations of at least two different relation types. A prediction is generated for an observation of a relation between two or more entities of the multi-relational data set based on a dot product of the optimized D-dimensional latent feature vectors representing the two or more entities. The training may comprise optimizing the D-dimensional latent feature vectors to maximize likelihood of the collection of observations, for example by Bayesian inference performed using Gibbs sampling.

FIG. 1

EP 2 738 716 A2

EP 2 738 716 A2

**Description**

BACKGROUND

The following finds application in online retail, social media network recommender systems, and so forth.

In various applications, it is desired to model relationships between entities of different types in order to predict values for such relationships between specific entities. For example, in online retail systems, it is desirable to provide a shopper with recommendations. Such recommendations can be based on the shopper's previous purchase history, but this approach is of limited value if the shopper has a short (or non-existent) purchase history on the retail site, or if the shopper is browsing a different area than usual. Another approach, known as collaborative filtering, utilizes purchase histories of other shoppers, product recommendations or reviews provided by other shoppers, and so forth in order to generate recommendations. Qualitatively, it can be seen that if other shoppers with similar profiles to the current shopper (e.g., similar age, gender, past purchase history, et cetera) have tended to buy a particular item, then that item may be something that should be recommended.

In the online shopping example, entities may include users (i.e. shoppers), items for sale, item features, user features, and so forth. Another illustrative application that can utilize such relational data between entities is social media networks, where it is desired to recommend tags for uploaded items (e.g., images or video clips), to recommend other users as potential user-user links, or so forth. The goal in such systems is to generate predictions, e.g. to predict which items for sale are likely to be purchased by the shopper (so as to present those predicted items to the shopper), or to predict item tags the user is likely to choose to assign to an uploaded image, or so forth.

Such systems can operate by modeling single relations. However, it is recognized that modeling multiple relations involving different entities can leverage a larger body of relational data and improve the predictions. Some known approaches in the multi-relational context are based on matrix co-factorization.

Disclosed herein are improved probabilistic relational data analysis techniques and recommender systems employing same.

BRIEF DESCRIPTION

In some illustrative embodiments disclosed as illustrative examples herein, a non-transitory storage medium stores instructions executable by an electronic data processing device to perform a method including: representing a multi-relational data set by a probabilistic multi-relational data model in which each entity of the multi-relational data set is represented by a *D*-dimensional latent feature vector; training the probabilistic multi-relational data model using a collection of observations of relations between entities of the multi-relational data set wherein the collection of observations include observations of at least two different relation types, the training generating optimized D-dimensional latent feature vectors representing the entities of the multi-relational data set; and generating a prediction for an observation of a relation between two or more entities of the multi-relational data set based on a dot product of the optimized D-dimensional latent feature vectors representing the two or more entities.

In some illustrative embodiments disclosed as illustrative examples herein, an apparatus comprises a non-transitory storage medium as set forth in the immediately preceding paragraph, and an electronic data processing device configured to execute the instructions stored on the non-transitory storage medium.

In some illustrative embodiments disclosed as illustrative examples herein, a method is performed in conjunction with a multi-relational data set represented by a probabilistic multi-relational data model in which each entity of the multi-relational data set is represented by a latent feature vector. The method comprises: optimizing the latent feature vectors representing the entities of the multi-relational data set to maximize likelihood of a collection of observations of relations between entities of the multi-relational data set wherein the collection of observations include observations of at least two different relation types, the optimizing generating optimized latent feature vectors representing the entities of the multi-relational data set; and generating a prediction for an observation of a relation between two or more entities of the multi-relational data set based on the optimized latent feature vectors representing the two or more entities. The optimizing and the generating are suitably performed by an electronic data processing device.

BRIEF DESCRIPTION OF THE DRAWINGS

FIGURE 1 diagrammatically shows a probabilistic relational data analysis system as disclosed herein.
FIGURE 2 diagrammatically shows modeling of three relations amongst user, image, image feature, and image tag entities in Flickr® data.
FIGURE 3 diagrammatically shows an illustrative probabilistic multi-relational data model in which each entity of the multi-relational data set is represented by a D-dimensional latent feature vector, constructed to perform the parameter estimation using maximum a posteriori (MAP) estimation.

FIGURES 4-10 present experimental results using the MAP estimation as described in the text.

FIGURE 11 diagrammatically shows the illustrative probabilistic multi-relational data model of FIGURE 3 constructed to employ Bayesian estimation to optimize the latent feature vectors.

FIGURES 12-17 present experimental results for the implementation employing Bayesian estimation, as described in the text.

DETAILED DESCRIPTION

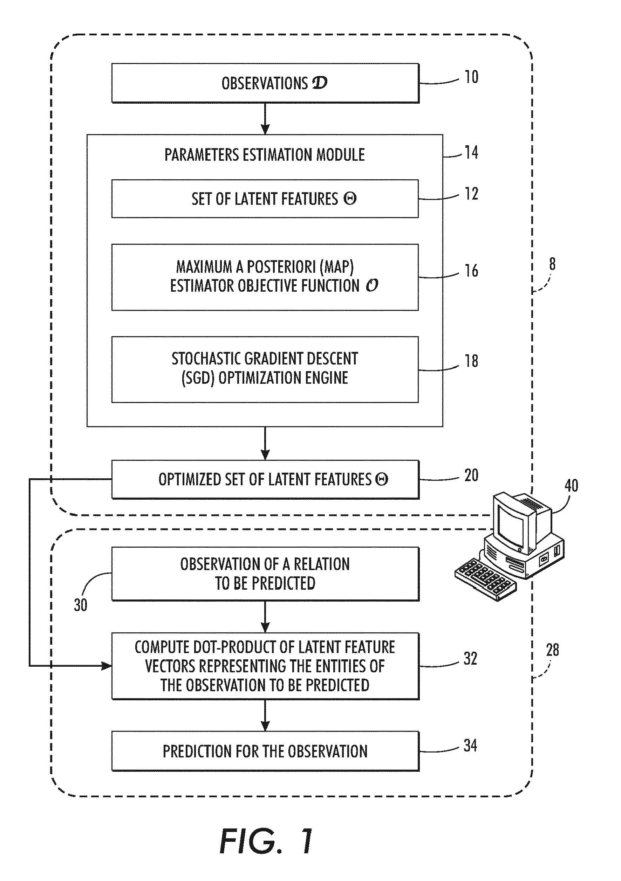

With reference to FIGURE 1, disclosed herein are probabilistic relational data analysis techniques employing a generative model in which each entity is represented by a latent features vector with D elements that represent values of D latent parameters or features. The number D of latent parameters is preferably chosen to be large enough to flexibly model the entities while being small enough to provide computational efficiency. In some embodiments, D is of order 10 or of order 100, although a larger or smaller number of latent parameters is contemplated. The latent features are optimized in a training phase **8** by training the model respective to a collection of observations **10,** represented herein as D. It is expected that the collection of observations **10** will be sparse, meaning that most possible relations will not be observed. (For example, any given user of an online retail store will generally not have rated most items available for sale, so most possible user-rating relation observations will be unavailable). The set of latent features **12** for all entities is denoted herein by Θ. A parameters estimation module **14** estimates values for the latent features **12** that maximize likelihood of the collection of observations **10,** that is, that maximize a likelihood $p(\mathcal{D}|\mathbf{\Theta})$. In one illustrative embodiment, this parameter optimization is performed using maximum a posteriori (MAP) estimation **16** to minimize an objective function denoted herein as $\mathcal{O}$. In the illustrative MAP estimation **16,** stochastic gradient descent (SGD) optimization is employed to perform this objective function minimization. The output is an optimized set of values **20** for the latent features Θ. In an alternative embodiment, Bayesian estimation **18** is employed. In the illustrative example, the Bayesian inference **18** is performed using Gibbs sampling.

With continuing reference to FIGURE 1, in a prediction phase **28,** the optimized latent feature values **20** are used to predict a relation between specified entities, that is, to predict an observation **30** of a relation to be predicted. In the disclosed generative model, each entity is represented by an optimized latent features vector of the same dimensionality D. As further disclosed herein, when using this generative model the predicted likelihood for the observation **30** is suitably computed as a dot-product **32** of the (optimized) latent feature vectors representing the entities of the observation to be predicted. The resulting prediction **34** is suitably displayed or otherwise utilized. For example, in an online retail store, the prediction **34** may be used to compile a "top-N" list of items predicted to be most likely to be purchased by the buyer.

With continuing reference to FIGURE 1, the training phase **8** and the prediction phase **28** are suitably implemented by a computer or other electronic data processing device **40** that includes a processor (e.g., microprocessor, optionally multi-core) and data storage and that executes instructions to perform operations including (for training) the MAP estimation **16** employing the SGD algorithm (or, in the alternative illustrative embodiment, the Bayesian estimation **18** employing Gibbs sampling), and (for prediction) the dot-product computation **32** and any ancillary calculations (e.g. ranking items to generate the top-N list, in the immediately previous example). The instructions that are executed by the computer or other electronic data processing device **40** to perform these operations are suitably stored on a non-transitory storage medium (not shown) such as a hard disk or other magnetic storage medium, random access memory (RAM), read-only memory (ROM), or another electronic storage medium, an optical disk or other optical storage medium, a combination of the foregoing, or so forth. While in illustrative FIGURE 1 the tasks of generative model training **8** and prediction **28** are performed by the same computer **40,** it is also contemplated to use different computers (or,more generally, different electronic data processing devices) to perform the training **8** and prediction **28** phases.

Having provided an overview of the relational data analysis techniques disclosed herein with reference to FIGURE 1, an illustrative example of an application is now described. Image data from Flickr® (available at http://www.flickr.com/) is used herein as a running example. The Flickr® tagging system includes four types of entities: users, items, item features, and tags. Items can include, by way of example, photos, music, videos, web pages, or so forth. Three types of relations (sometimes also called views) are considered amongst these four entities. The first relation $R_1$ indicates a user u has tagged item $i$ with tag $t$. The second relation $R_2$ indicates that user $u_1$ is linked with (e.g. a friend of) user $u_2$. The third relation $R_3$ characterizes item $i$ by feature $f$.

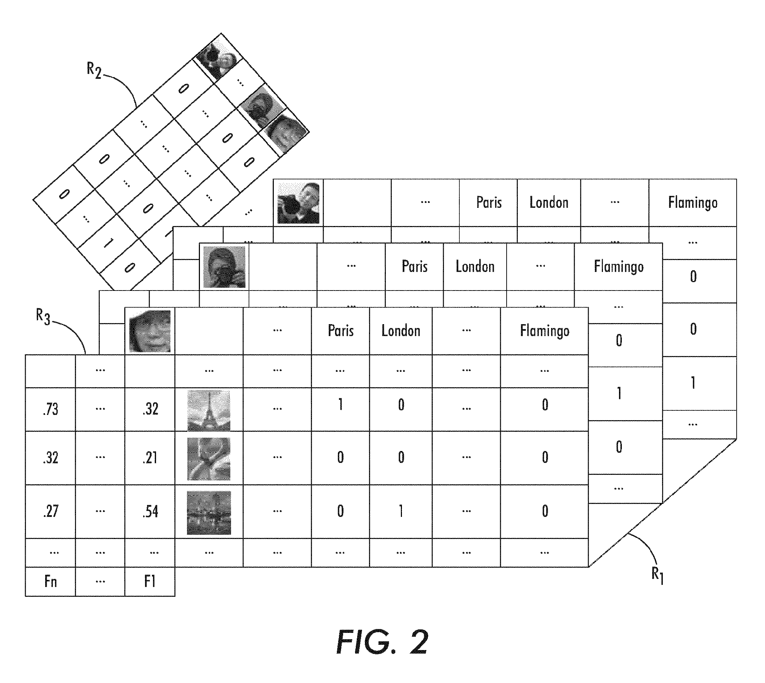

Relation $R_1$ on triples (*user, tag, item*) is a relation of order 3 and can be represented by a tensor, whereas Relations $R_2$ and $R_3$ are of order 2 and are on pairs *(user,user)* and *(item, feature)* respectively. Note that unlike item features, tags are typically user-dependent. FIGURE 2 diagrammatically shows an example of the considered three relations $R_1, R_2,$ and $R_3$ for the Flickr® media sharing site. The user-tag tensor (relation $R_1$) is binary, with one representing that a user has annotated an image with a tag and zero indicating otherwise. The user-user matrix (relation $R_2$) is also binary and represents the user-to-user interactions. The item-feature matrix (relation $R_3$) represents the feature values for images, and has generally continuous values, although in some cases a feature may be binary (e.g., a monochrome image feature may be either one indicating the image is monochrome or zero indicating otherwise).

In the context of tag recommendations, a significant difficulty arises if there are new entities (e.g. new users or new items) that were not present in the collection of training observations. This is known as the cold start problem, and arises when the relational data analysis system does not have enough data to make "intelligent" predictions. It has been estimated that in social network tagging tasks, over 90% of items are new to the service system in the sense that they do not exist in the training data. See Yin et al., "A probabilistic model for personalized tag prediction", in KDD, 2010. The cold-start problem is not specific to the social tagging system, but rather is a common problem facing general recommender systems including recommendations of users and movies. See Yin et al., "Structural link analysis and prediction in microblogs", in Proceedings of 20th ACM Conference on Information and Knowledge Management (CIKM 2011), October 2011.

Moreover, relational data analysis is in some applications applied to perform tasks other than tag recommendations, such as document network analysis, social network analysis, and so forth. For instance, in social netowrks it is useful to recommend other users for a user to be connected with in order to promote social interaction. These tasks (e.g., tag and user recommendations) are co-related, and are advantageously addressed simultaneously rather than separately.

To address such correlated tasks simultaneously, it is disclosed herein to employ a probabilistic generative model for multi-relational data that consist of relations or views with different orders (2 for matrices, 3 for tensors and more), with the aim of inferring missing relation instances. The disclosed approach models all views of a social service system (or other data source undergoing relational data analysis), and can yield multitask recommendations (e.g., recommendations of tags and users) simultaneously. The intuition of the disclosed model is the following: a multitude of observed relation instances are informative of each other when predicting unobserved instances; and by representing each entity using a hidden (i.e. latent) feature vector, this entity is involved in the generative process of other relations or views.

The relational data analysis techniques disclosed herein are described by way of further illustrative examples below.

Consider a multi-relational dataset with $K$ types of entities, with $N_k$ entities of the $k^{th}$ entity type where $k \in \{1,...,K\}$. The number of relations (also sometimes referred to as "views" in certain applications) is $V$, and each relation (i.e. view) $v \in \{1,...,V\}$ is associated with a list $S_v$ of entity types involved in the relation $v$, that is $S_v = (S_{v1},...,S_{v|Sv|})$ with $S_{vj} \in \{1,...,K\}$. Relations are encoded by multi-dimensional arrays, that is, the relation $v$ is represented by a multi-dimensional array having $|S_v|$ dimensions with dimension $j$ indexed by entity type $S_{vj}$. Note that the term "relation" is also sometimes used to denote specific observations of a relation. That is, the relation $v$ is associated with a list $S_v$ of entity types involved in the relation $v$, where its cardinality $|S_v|$ is equal or larger than 2. A specific observation of this relation $v$ is between specific entities of the $|S_v|$ entity types. For brevity, such an observed relation is sometimes also referred to simply as a "relation". It is also noted that a relation can be between entities of the same entity type - for example, a relation $v = (user,user)$ has $|S_v| = 2$ and is a relation between two entity types, both of which are the same *user* entity type. A specific observation of this relation will typically be a relation between different users. This can be extended to a relation between at least three entity types, e.g. for $|S_v| = 3$ two (or even all three) entity types of the list $S_v$ may be the same entity type.

With reference back to FIGURE 1, the data (i.e. observations) **10** associated to relation $v$ are observed triplets

$$\mathcal{D} = (v_m, \mathbf{i}_m, r_m)_{m=1}^{M_v}$$ where $M_v$ are the number of observations for relation $v$ and, for the $m^{th}$ observation, $v_m \in \{1,...,V\}$ is the index of the relation and $\mathbf{i}_m = \{i_{m1}, ..., i_{m|S_{v_m}|}\}$ is a list of entity indices identifying the observation with value $r_m \in \mathbb{R}$. The disclosed probabilistic multi-relational data model represents each entity as a latent (i.e. unobserved) continuous feature vector in the vector space $\mathbb{R}^D$ where $D$ is the number of latent features for each entity, and is typically relatively small (e.g. of order 10 or 100). The complete set of low-dimensional latent features **12** for all entities of all K entity types is denoted by $\Theta = (\Theta_1,...,\Theta_K)$ where the latent features for the $N_k$ entities of type $k$ are

$$\Theta_k = \left( \theta_{k1}, ..., \theta_{kN_k} \right)^T.$$

A summary of the foregoing notation is set forth in Table 1. The variance $\alpha_v^{-1}$ given in Table 1 assumes that the distribution of observations is modeled as a Gaussian distribution with relation-dependent variances $\alpha_v^{-1}$. This is merely an illustrative example, and other types of generalized linear models such as Poisson or Bernoulli distributions can be employed.

**Table 1 - Notational summary**

| Symbol | Meaning |
|---|---|
| $K$ | Number of entity types |
| $N_k$ | Number of entities of type $k$ |
| $D$ | Number of latent feature dimensions (for each entity) |
| $V$ | Number of relations (i.e. views) |
| $\Theta_k$ | Latent features for entities of type $k$ |
| $R_v$ | Set of $M_v$ values corresponding to relation $v$ observations |
| $M_v$ | Total number of observations of relation $v$ |
| $S_v$ | List of indices identifying the types of relation $v$ |
| $\alpha_v^{-1}$ | Variance of the observations of relation $v$ |

To facilitate understanding of the illustrative notation, the previously described example is considered. This example has $K$ = 4 entity types: users (u), items (i), item features (f), and tags (t); and three relations $R_1$ (user $u$ tagged item $i$ with tag t), $R_2$ (user $u_1$ linked with user $u_2$) and $R_3$ (item $i$ having feature $f$). Relation $R_1$ links different entity types forms a three-dimensional array, while relations $R_2$ and $R_3$ are each encoded as two-dimensional arrays. To this end, the lists $S$ corresponding to relations $R_1$, $R_2$, and $R_3$ can be defined as $\{S_1, S_2, S_3\}$, where $S_1$ = $\{u,i,t\}$, $S_2$ = $\{u,u\}$, and $S_3$ = $\{i, f\}$, respectively. FIGURE 2 illustrates these interconnected arrays schematically.

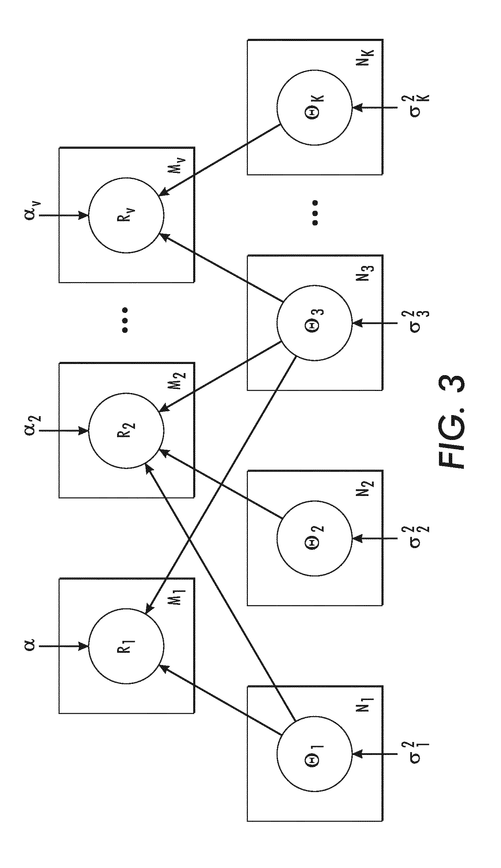

With reference to FIGURE 3, a graphical model for the multi-relational data factorization employing MAP estimation **16** is diagrammatically illustrated. In this model, $R_1$, ..., $R_V$ are the V relations, $\Theta_1,...,\Theta_K$ are the latent features associated to the $K$ entity types, $\alpha_1, ..., \alpha_V$ are the unobserved precisions (inverse variances) associated with the observed relations, and similarly $\sigma_1^2, ..., \sigma_K^2$ are the unobserved variances associated with the latent features. The model assumes multi-linear links in order to predict the mean of the observations given the latent features of the corresponding entities. Formally, this means that for an observation of relation $v$ with indices $\mathbf{i} = \left(i_1, ..., i_{|S_v|}\right)$, the mean of the observation r is a multi-dimensional dot-product $\langle ., ...,. \rangle$ (i.e., the prediction operation 32 of FIGURE 1), defined as:

$$\langle \Theta_i \rangle = \langle \theta_{i1}, ..., \theta_{i|S_v|} \rangle = \sum_{d=1}^{D} \prod_{k \in S_v} \theta_{ki_kd} \qquad (1)$$

where $\theta_{ki_kd}$ denotes the value of the $d^{th}$ element of the latent feature vector $\theta_{ki_k}$ representing the entity indexed by $i_k$ of entity type $k$. Note that for binary relations, the mean of the observation r given in Equation (1) is a standard vector dot-product. Thus, once the latent model parameters $\Theta = (\Theta_1, ..., \Theta_K)$ are estimated by training, computing a prediction using the trained model entails a straightforward dot-product computation. The number $D$ of latent parameters is preferably small to provide computational efficiency: in experiments reported here, the number of latent feature dimensions $D$ is varied between 5 and 40. The number of entity types in $S_v$ is typically also small, e.g. the Flickr® data set includes four types of entities: users, items, item features, and tags. Thus, the dot product of Equation (1) entails performing only a small number of multiplication and addition operations.

The model training performed by the parameters estimation module **8** of FIGURE 1 entails optimizing the latent model parameters **12** denoted as $\Theta = (\Theta_1, ..., \Theta_K)$ to maximize the likelihood $p(\mathcal{D}|\Theta)$ of the set of observations $D$ given the latent model parameters $\Theta$. Assuming independent observations, this likelihood is suitably given by:

$$p(\mathcal{D}|\Theta) = \prod_{(v,\mathbf{i},r)\in\mathcal{D}} p\left(r|\theta_{S_{v1}i_1}, ..., \theta_{S_{v|S_v|}i_{|S_v|}}, \alpha_v\right)$$

$$= \prod_{(v,\mathbf{i},r)\in\mathcal{D}} \mathcal{N}\left(r|\sum_{d=1}^{D}\prod_{k\in S_v}\theta_{ki_kd}, \alpha_v^{-1}\right) \tag{2}$$

$$= \prod_{(v,\mathbf{i},r)\in\mathcal{D}} e^{-\ell\left(\Sigma_{d=1}^{D}\prod_{k\in S_v}\theta_{ki_kd},r;\alpha_v\right)}$$

where

$$\ell(\bar{r},r;\alpha) = \frac{\alpha}{2}(r-\bar{r})^2 - \frac{1}{2}\log\left(\frac{\alpha}{2\pi}\right) \tag{3}$$

Is the quadratic loss. It is also assumed that the prior distributions over $\Theta_1, ..., \Theta_K$ are independent isotropic Gaussian distributions with type-dependent variances $\sigma_1^2, ..., \sigma_K^2$, that is:

$$p(\Theta_k|\sigma_k^2) = \prod_{j=1}^{N_k} \mathcal{N}\left(\theta_{kj}|0, \sigma_k^2\mathbf{I}\right) \tag{4}$$

Given the foregoing model, the latent variables $\Theta$ are to be inferred given the observations D. In an illustrative approach, a maximum a posteriori (MAP) estimator of $\Theta$ is employed. A suitable smooth and differentiable objective function corresponding to a negative log-likelihood may be employed, e.g.:

$$\min_{\Theta} \mathcal{O} \text{ , where } \mathcal{O} := -\log p(\mathcal{D}|\Theta, \alpha) - \log p(\Theta|\sigma) \tag{5}$$

and $\alpha = (\alpha_1, ..., \alpha_V)$ and $\sigma = (\sigma_1, ..., \sigma_K)$.

The objective function $\mathcal{O}$ may be minimized respective to $\Theta$ by various approaches. It is to be appreciated that as used herein the term "minimized" and similar phraseology encompasses iterative techniques that iteratively reduce the value of the objective function $\mathcal{O}$ and terminate in response to a suitable termination criterion (e.g., iteration-to-iteration improvement becoming less than a termination threshold, largest percent change in a parameter being less than a termination threshold, et cetera) where the solution at termination is not the absolute global minimum. It is also to be appreciated that as used herein the term "minimized" and similar phraseology encompasses iterative techniques that may settle upon a local minimum that is not the global minimum.

One suitable iterative minimization approach is alternating least squares (ALS). ALS is a block-coordinate descent algorithm which minimizes objective function $\mathcal{O}$ with respect to the latent variables of one of the entity types, say $\Theta_k$, by fixing the latent variables of the other entity types. This procedure is repeated for the latent variables of each entity type sequentially, ensuring that each step decreases the objective function $\mathcal{O}$. The procedure is repeated until a suitable convergence criterion is met. The inner optimization problems are ordinary least squares which can be solved optimally.

Another suitable iterative minimization approach is stochastic gradient descent (SGD), which is advantageous in applications targeting large data sets for which even one pass through the data can be computationally intensive. In contrast, ALS performs K constituent passes per iteration, and other batch-type techniques can suffer similar difficulties. Thus, SGD algorithms are computationally much cheaper than their batch counterpart for large datasets. In view of such considerations, the illustrative parameters estimation module **14** (see FIGURE 1) minimizes the objective function $\mathcal{O}$ with respect to the latent variables $\Theta$ **12** using the SGD optimization engine, whose operation is further described next.

SGD algorithms minimize sum functions of the form $\mathcal{O} = \sum_{m=1}^{M} \mathcal{O}_m$ where M is typically large. At each iteration of the SGD algorithm, only the gradient of a single element of the sum, say $\mathcal{O}_m$, is utilized. To apply this algorithm to the objective function $\mathcal{O}$ of Equation (5), the objective is decomposed in terms of a sum. The negative log-likelihood term $-\log p(\mathcal{D}|\Theta, \alpha) = -\sum_{m=1}^{M} \log p(r_m|v_m, i_m, \Theta, \alpha)$ has a suitable form, but further consideration is called for when dealing with the penalization term $-\log p(\Theta|\sigma)$. Denoting $v_{kn}$ the number of observations for the $n^{th}$ entity of type $k$, it can be shown that:

$$\sum_{(v,\mathbf{i},r)\in\mathcal{D}} \sum_{j}^{|S_v|} \frac{1}{v_{S_{vj}i_j}} = 1 \qquad (6)$$

holds. Hence, the penalization term can be combined with the individual likelihood terms to obtain the following expressions:

$$\mathcal{O} = \sum_{(v,\mathbf{i},r)\in\mathcal{D}} \ell\left(\sum_{d=1}^{D}\prod_{k\in S_v} \theta_{ki_kd}, r; \alpha_v\right) + \sum_{k=1}^{K} \log p(\Theta_k)$$

$$= \sum_{(v,\mathbf{i},r)\in\mathcal{D}} \ell\left(\sum_{d=1}^{D}\prod_{k\in S_v} \theta_{ki_kd}, r; \alpha_v\right) + \sum_{j=1}^{|S_v|} \frac{\left\|\boldsymbol{\theta}_{S_{vj}i_j}\right\|^2}{2\sigma_{S_{vj}}^2 v_{S_{vj}i_j}} \qquad (7)$$

which has the form $\mathcal{O} = \sum_{m=1}^{M} \mathcal{O}_m = \sum_{m=1}^{M} \mathcal{O}_{(v_m,\mathbf{i}_m,r_m)}$ suitable for SGD if we set:

$$\mathcal{O}_{(v,\mathbf{i},r)} := \ell\left(\sum_{d=1}^{D}\prod_{k\in S_v} \theta_{ki_kd}, r; \alpha_v\right) + \sum_{j=1}^{|S_v|} \frac{\left\|\boldsymbol{\theta}_{S_{vj}i_j}\right\|^2}{2\sigma_{S_{vj}}^2 v_{S_{vj}i_j}} \qquad (8)$$

The gradient with respect to $\theta_{kn}$ can be computed for every observation $(v,\mathbf{i},r)$ according to:

$$\nabla\boldsymbol{\theta}_{kn}\mathcal{O}_{(v,\mathbf{i},r)} := \ell'\left(\sum_{d=1}^{D}\prod_{k\in S_v} \theta_{ki_kd}, r; \alpha_v\right) \frac{\prod_{j=1}^{|S_v|}\boldsymbol{\theta}_{S_{vj}i_j}}{\boldsymbol{\theta}_{kn}} + \frac{\boldsymbol{\theta}_{kn}}{\sigma_{S_{vj}}^2 v_{kn}} \qquad (9)$$

if $k \in S_v$ and $n \in \mathbf{i}$, and 0 otherwise. The function $\ell'$ denotes the first derivative of the loss with respect to the first parameter, i.e. $\ell'(\bar{r},r,\alpha) = \nabla_{\bar{r}}\ell(\bar{r},r,\alpha) = \alpha(\bar{r} - r)$. Note that this gradient can be efficiently computed since it only requires the latent feature values of the entities involved in the current observation (i.e. with indices given by i).

If observations are chosen at random irrespective of the relation, on average the exact gradient is recovered (up to a $M^{-1}$ factor) of the full objective function $\mathcal{O}$ of Equation (5), i.e.:

$$\mathbb{E}\left[\nabla \boldsymbol{\theta}_{kn} \mathcal{O}_{(v,\mathbf{i},r)}\right] = \frac{1}{M} \nabla \theta_{kn} \mathcal{O} \qquad (10)$$

Pseudocode for a suitable implementation of the SGD minimization is presented in Algorithm 1. Given a suitably chosen step size sequence $\eta = (\eta_l)_{l \geq 1}$, the SGD algorithm updates the latent features for which the gradient is non-zero at every step $l$. Each update can be interpreted as follows. For the $m^{th}$ training observation, SGD predicts the rating $\bar{r}_m$ and makes a small gradient step $\eta_\ell (r_m - \bar{r}_m) \boldsymbol{\theta}_{ki_j}$ for each entity $i_j$ involved in the observation in order to minimize the future prediction errors for this training observation.

The time complexity of updating all the latent parameters $\theta_{kn}$ per observation is of order $O(KND)$, where $N = \sum_k N_k$ is the total number of entities. A single pass on the data is of order $O(KNDM)$. Assuming the maximum number of sweeps is $L$, then the total time complexity is $O(KNDML)$. Hence, since $K$, $N$, and D are constants, the time complexity is linear in the number of observations, $O(ML)$. In experiments reported herein, early stopping was used to decide when to stop the SGD algorithm, for example after approximately 100 sweeps in some experiments.

Under the Gaussian distribution assumption the hyperparameters $\alpha_1, ..., \alpha_v$ correspond to a weighting of the different relations. The values of $\alpha_v$ can be manually set, or the residue can be used to estimate them as follows:

$$\alpha_v^{-1} \leftarrow \frac{1}{M_v - 1} \sum_{(v,\mathbf{i},r) \in \mathcal{D}} \left( \sum_{d=1}^{D} \prod_{k \in S_v} \theta_{ki_k d} - r \right)^2 \qquad (11)$$

In the following, some illustrative experimental results are presented.

---

**Algorithm 1** SGD for Multi-Relational Database Factorization

---

**INPUT:** prior parameters $\sigma_1^2, \sigma_2^2 \ldots \sigma_K^2$ and $\alpha_1, \alpha_2 \ldots \alpha_V$
**OUTPUT:** model parameters $\Theta_1, \Theta_2, \ldots \Theta_K$

  1: INITIALIZE model parameters $\Theta_1, \Theta_2, \ldots \Theta_K$
  2: **for** $\ell = 1, ..., L$, **do**
  3:    SHUFFLE the sequence of observations $(v, \mathbf{i}, r)$ at random.
  4:    **for all** $(v, \mathbf{i}, r) \in \mathcal{D}$ **do**
  5:      UPDATE all associated $\Theta_{k,t}$ at parallel.

$$\boldsymbol{\theta}_{kn}^{(\ell+1)} \leftarrow \boldsymbol{\theta}_{kn}^{(\ell)} - \eta_l \nabla \boldsymbol{\theta}_{kn} \mathcal{O}_{(v,\mathbf{i},r)}^{(\ell)},$$

where $\boldsymbol{\alpha}^{(\ell)}$ is used to calculate $\nabla \boldsymbol{\theta}_{kn} \mathcal{O}_{(v,\mathbf{i},r)}^{(\ell)}$.

  6:    **end for**
  7:    UPDATE $\alpha_1, \alpha_2 \ldots \alpha_V$
  8:    **if** the stop criterion is satisfied **then**
  9:      BREAK
10:    **end if**
11: **end for**

---

The first data set considered is the MovieLens data set (available at http://www.grouplens.org/node/73). This data set consists of one million ratings from 6,000 users on 4,000 movies with time stamps between April 2000 and February 20003. The ratings are integer scores ranging from 1 to 5. To these ratings is associated user demographic information (e.g., age, gender, occupation, etc.), as well as movie information (e.g., movie title, release date, genres, etc.). In the experiments reported herein, the user features were restricted to the age, the gender, and the occupation, and only the genre feature was used to describe movies. (Note that the illustrative example of FIGURES 2 and 3 included item features *f,* but did not include user features). The ages are partitioned into 7 groups: under 18, 18 to 24, 25 to 34, 34 to 44, 45 to 49,50 to 55, and over 56. The age information is encoded by 7-dimensional binary vector with a single entry being equal to 1 to indicate which group the user belongs to. The gender, user occupation and movie genre are also represented by binary vectors.

User, user feature, movie, and movie genre are denoted herein respectively by *u, f, m*, and *g*. In the experiments, the relations considered where $S_1 = (u,m)$, $S_2 = (u, f)$, and $S_3 = (m,g)$. Based on the time stamp of the ratings (January 1 st 2001), we split the ratings data into a training set of 904,796 instances and a test set of 95,413 instances. For the two other relations, that is $S_2$ and $S_3$, one out of every ten entries was randomly selected for testing and the rest were used as training data. The objective of the experiments was not only to predict ratings, but also to predict unobserved user features and unobserved movie genres.

The second data set was downloaded from Flickr® with the help of social-network connectors (Flickr API). This gave access to entities and relations. The data set includes 2,866 users, 60,339 tags, 46,733 items (e.g., images). Three relations were considered. Relation $S_1 = (u, t, i)$ indicates that user u assigned tag *t* to item *i*. Relation $S_2 = (i, f)$ characterizes item *i* by a feature vector *f* of 1024 dimensions. 1024-dimensional visual feature vectors were extracted in accord with Perronnin et al, "Fisher kernels on visual vocabularies for image categorization", in CVPR, 2007. Relation $S_3 = (u_1, u_2)$ encodes a partially observed adjacency matrix representing the explicitly expressed friendship relations among users. For instance, if user $u_1$ and $u_2$ are friends, then the value at $(u_1, u_2)$ and $(u_2, u_1)$ are both equal to 1, otherwise they are equal to 0.

The first task performed was the tag prediction task, that is predicting tags that users will assign to items. To this end relation $S_1$ is modeled, for which the Flickr data set has a total 373,125 records with time stamps. The data is partitioned into training and test set by the time stamp of April 1, 2010. In total, there are 2,613,388 observations for training and 205,880 observations for test. Note that there are only positive samples for the Flickr data set, 50 tags were sampled at random as negative samples for training the model. The second task that was performed is predicting image features. This corresponds to relation for which 50,000×1,024 feature values were available. One tenth of the values were randomly selected as test observations. The third task performed was to recommend new friends to users. This corresponds to relation $S_3$. Again, the data were split randomly resulting in 1,377,548 training observations and 342,576 test observations.

Finally, the third data set is Bibsonomy, which is a bookmark data set employed in the ECML-PKDD'09 Challenge Workshop (see http://www.kde.cs.uni-kassel.de/ws/dc09/). The data set includes 2,679 users, 263,004 items, 56,424 tags, 262,336 posts and 1,401,104 records. All of the posts are associated with time stamps. Each item contains textual content. A simple language model (bag-of-words) was first used to describe the items and then latent Dirichlet allocation (Blei et al., "Latent Dirichlet allocation", Journal of Machine Learning Research, 3:John Laffery, January 2003) was used to produce a latent representation of 100 dimensions. Two relations were considered for this data set: $S_1 = (u, t, i)$, where user u applied tag *t* to item *i,* and $S_2 = (i, f)$, where each item *i* is described by a 100-dimensional feature *f.* To model $S_1$, a time stamp of August 1, 2008 was used to produce a training and test set of respectively 7,214,426 and 1,585,179 observations. To model S2, there are 263,004×1024 feature values. Ten percent of them were selected as test data.

The disclosed relational data analysis was compared with conventional tensor/matrix factorization. On each data set, the problem was solved first by using individual factorizations, in which the whole recommendation is split into several independent tasks. Then the disclosed joint factorization model was used to solve these tasks simultaneously. Parameters $\alpha$ and $\sigma^2$ were set equal to 1 for all three data sets. For the MovieLens data set, the results are shown in Table 2. (Note that the disclosed relational data analysis is referenced as "PRF", i.e. probabilistic relation factorization, in the tables herein).

**Table 2: Test RMSE of PRF and independent factorization for MovieLens. We consider different subsets of relations.**

| Dimension | PRF | Independent |
|---|---|---|
| $S_1 = (u, m)$ | 1.0588 | 1.2159 |
| $S_2 = (u, f)$ | 0.2646 | 0.2190 |
| $S_3 = (m, g)$ | 0.2629 | 0.3221 |
| $S_1 = (u, m)$ | 1.0605 | 1.2159 |
| $S_2 = (u, f)$ | 0.2647 | 0.2190 |
| $S_1 = (u, m)$ | 1.0972 | 1.2159 |
| $S_3 = (m, g)$ | 0.2621 | 0.3221 |

The first three rows of Table 2 indicate the results when the three relations are factorized and compared with the independent factorization. Results show that the performance of PRF is better than the traditional probabilistic matrix factorization for the tasks of predicting ratings and item features. In this system, the main task is to predict ratings, that is to predict the relation $S_1 = (u, m)$, which is co-related to other two relations. To decide which relation contributes more to the rating prediction, the following two experiments were conducted. In the first experiment the PRF only processed $S_1 = (u,m)$ and $S_2 = (u, f)$. In the second experiment the PRF only processed $S_1 = (u,m)$ and $S_3 = (m, g)$. It is seen that the view $S_2$ contributes more than $S_3$. In addition, it is noteworthy that the combination of the three relations yields the best performance.

For the Flickr® data set, the results are shown in Table 3. The individual tensor factorization is used to predict tags. Similar experiments were conducted as for the MovieLens data set. The first three lines of Table 3 report PRF applied to factorize all three relations. Results for two PRF models are reported: PRF1 where the residue was used to estimate and update the $\alpha$ parameters at every iterative step, and PRF2 where $\alpha = 1$ throughout, which is the same setting as in the MovieLens experiment. The PRF is seen to lead to a noticeable improvement. The Root Mean Square Error (RMSE) associated to $S_2 = (i,f)$ is also better than the independent factorization. We also notice that for $S_3 = (u_1, u_2)$, the independent factorization leads to slightly better results than for PRF. However, the main task in this service is tag recommendation, and the relation $S_1$ is co- related with $S_2$ and $S_3$. To decide which helps most to the tag prediction task, two experiments were conducted as with the MovieLens experiments. As expected, the item feature is more critical to the tag prediction task. This result agrees with previous estimates that over 90% cases are cold start problems in realistic social media data sets. Note that for the cold start problem, the content features of item are essential for tag prediction because the items do not exist in the training data.

**Table 3: Test RMSE of PRF1 (with optimization of $\alpha$), PRF2, and independent factorization for Flickr. We consider different subsets of relations.**

|  | PRF1 | PRF2 | Independent |
|---|---|---|---|
| $S_1 = (u, t, i)$ | 0.3435 | 0.3429 | 0.8226 |
| $S_2 = (i, f)$ | 0.9349 | 0.9427 | 0.9603 |
| $S_3 = (u_1, u_2)$ | 0.2188 | 0.2368 | 0.1841 |
| $S_1 = (u, t, i)$ | 0.3499 | 0.4005 | 0.8226 |
| $S_2 = (i, f)$ | 0.9547 | 0.9425 | 0.9603 |
| $S_1 = (u, t, i)$ | 0.46 | 0.4565 | 0.8226 |
| $S_3 = (u_1, u_2)$ | 0.1962 | 0.2159 | 0.1841 |

The Bibsonomy data is similar to the Flickr® data, but here there is no equivalent to the $S_3 = (u_1, u_2)$ relation. The results of Bibsonomy are shown in Table 4. There are also two versions - PRF1 and PRF2, which are the same as used in the experiment with Flickr®. The results are consistent with the Flickr® data: PRF models noticeably decrease the RMSE for tag prediction task. In the PRF1 version, it is also found that the performance in both views can lead to significant improvements: in (user, tag, item), the RMSE decrease from 1.04 to 0.3484 and in (item, feature), the RMSE decreases from 1.7387 to 1.0088.

**Table 4: Test RMSE of PRF1 (with optimization of $\alpha$), PRF2, and independent factorization for Bibsonomy.**

|  | PRF1 | PRF2 | Independent |
|---|---|---|---|
| $S_1 = (u, t, i)$ | 0.3484 | 0.3638 | 1.0409 |
| $S_2 = (i, f)$ | 1.0088 | 1.8116 | 1.7387 |

From the experiments on the three data sets, improvement is obtained by considering the multiple relations in parallel. For Flickr® and MovieLens, where three relations were considered, the performance of modeling all three together leads to better a performance than modeling any two out of the three relations. For three tasks, the performance of the disclosed model in two out of three tasks is better than the performance of independent factorization models. In particular, for the main task, rating prediction and tag prediction, the disclosed model performs significantly better.

Reported empirical evaluation sometimes neglects the temporal information and generates test data randomly. Such a setting often leads to better reported performance; however, it does not reflect practical settings where future data cannot be used to predict past data. Accordingly, two experiments were conducted to analyze the effect of these data. Methods in which the test data is randomly sampled are referred to herein as "Static". Methods where the test data is generated by splitting the whole data set by a time stamp are referred to herein as "Dynamic". For the two methods, three pairs of test data sets were generated: 50% data as training and 50% for testing; 80% data as training and 20% for testing; and 90% data as training and 10% for testing. The results for MovieLens data are presented in Table 5 where "PRF" is the disclosed model where all variances are set to 1 and "Indep." is a shorthand for the independent factorization model. It is seen that the Static test achieves much better performance compared with the Dynamic test when the same amount of data is used for training. As the training data decreases, the performance of Dynamic test decrease dramatically, which suggests that temporal analysis is advantageous. The disclosed model (PRF) in both two evaluation methods can outperform the independent matrix factorization. Especially in the Dynamic test, which is more realistic and practical, the improvement is particularly noticeable. In the following experiments, the Dynamic test is employed as the main test methods on the three data sets.

**Table 5: Test RMSE of randomly selected data (Static) vs. Temporally split data (Dynamic) for MovieLens.**

| % data for training | Model | Static test | Dynamic test |
|---|---|---|---|
| 90% | PRF | 0.9287 | 1.0588 |
| | Indep. | 0.9347 | 1.2159 |
| 80% | PRF | 0.9501 | 2.2722 |
| | Indep. | 0.9540 | 3.2984 |
| 50% | PRF | 1.0320 | 3.0931 |
| | Indep. | 1.0415 | 4.2614 |

Intuitively, the strength of the disclosed model resides in the fact that it can exploit multiple relations jointly. The improvement is expected to be the most apparent when the amount of data is small. To verify this conjecture, several test sets were generated by using different time stamps to split the MovieLens data.

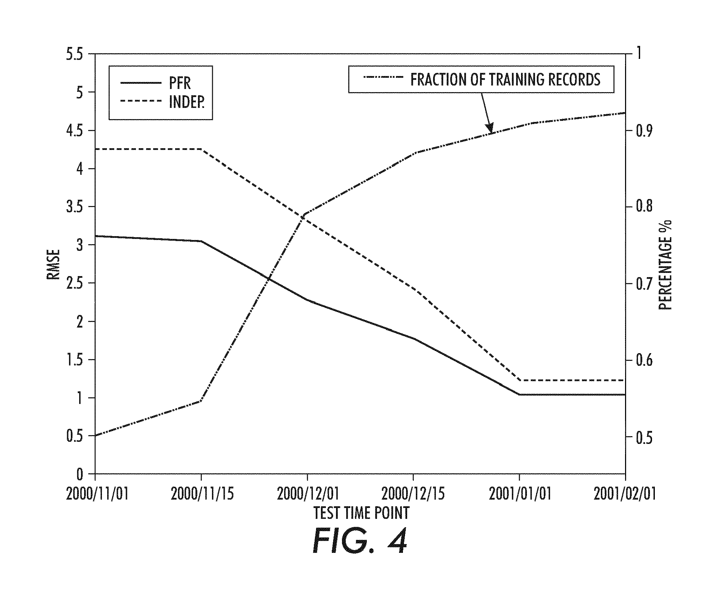

FIGURE 4 shows the results. The upwardly sloping line represents the fraction of training data. It is seen that the performance increases (lower RMSE) when the fraction of training data increases, but the PRF model performs better than the independent factorization. Moreover, the less data, the larger the improvement provided by PRF.

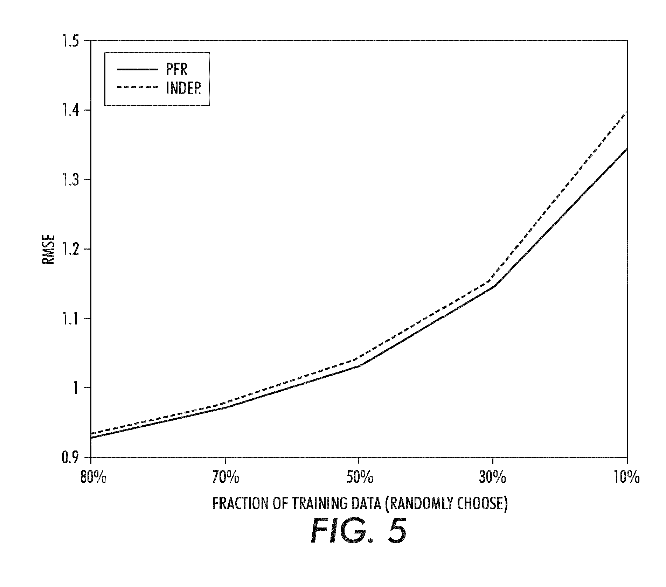

FIGURE 5 shows similar results for the static test.

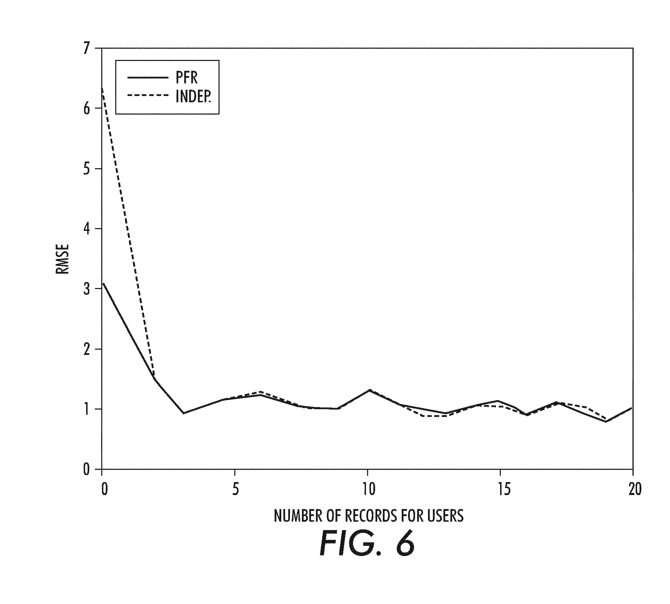

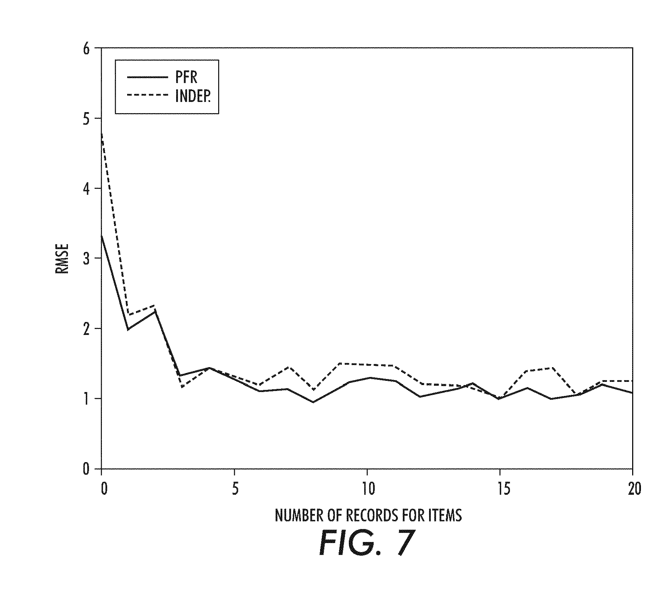

Next, the frequencies of the specific item in the training set for each item of the test set were computed. For test items with the same frequencies in training and test, the average RMSE is calculated. The same calculations were done for users. The results are shown in FIGURE 6 (number of records for users) and FIGURE 7 (number of records for items). For users or items with fewer training data, we obtain a larger improvement than with independent factorization. Particularly, if the test user or test item do not exist in training data (cold start problem), the independent factorization methods totally fail, but the PRF model can still provide good performance.

Next, the fraction of cold start cases is analyzed is for three data sets. For MovieLens data, for rating view, the ratings matrix was split into training and test data by January 1, 2001. In test data, we have 95,413 records, among which there are 1,026 records with new users (cold start) and 90 records with new items. For these cases, the independent matrix factorization does not apply. The PRF model, which makes use of the information about the whole system, performs better than independent matrix factorization on these cases, as already shown. It is also noteworthy that the number of test records with cold start users is far more than the number of test records with cold start items. This explains why the (user, profile) view contributes more in the experiments than (item, feature) view for rating prediction task.

For Bibsonomy and Flickr® data, the tagging system is a triple-element relationship, so the data is even sparser than MovieLens data. For example, in Bibsonomy, the data is split into training data and test data by August 1, 2008. In test data, 167,040 records are available, among which there are 105,185 records with new users (cold start) and 155,140 records with new items. For the Flickr® data, the results of the (item features) view can contribute more than the social network view, and it is consistent with the analysis that the number of the test records with new items is more than the number of test records with new users.

Finally, experiments were conducted with latent features of different dimensions $D \in \{5,10,20,30,40\}$, and show results for MovieLens, Flickr® and Bibsonomy in Tables 6, 7 and 8 respectively. From these tables, it is seen that for MovieLens, the results show a trend toward overfitting with growing $D$ as the test error increases. For the Flickr® data, the optimal $D$ should lie between 10 and 20. However, for the Bibsonomy data is it less clear: there seem to be multiple minima, one for small D and one for a larger $D$.

**Table 6: Test RMSE for MovieLens. User, user feature, movie, and movie genre are respectively denoted by** *u, y, m,* **and** *g.*

| Dimensions | 5 | 10 | 20 | 30 | 40 |
|---|---|---|---|---|---|
| $S_1 = (u, m)$ | 0.9960 | 1.0122 | 1.0588 | 1.1045 | 1.1445 |
| $S_2 = (u, f)$ | 0.2657 | 0.2640 | 0.2646 | 0.2683 | 0.2652 |
| $S_3 = (m, g)$ | 0.2669 | 0.2637 | 0.2629 | 0.2654 | 0.2661 |
| TOTAL | 0.8934 | 0.9075 | 0.9486 | 0.9891 | 1.0243 |

**Table 7: Test RMSE for Flickr. User, tag, item, and feature are respectively denoted by** $u, t, i,$ **and** $f.$

| Dimensions | 5 | 10 | 20 | 30 | 40 |
|---|---|---|---|---|---|
| $S_1 = (u, t, i)$ | 0.3344 | 0.3359 | 0.3429 | 0.3514 | 0.3564 |
| $S_2 = (i, f)$ | 0.9443 | 0.9312 | 0.9427 | 0.9921 | 1.0794 |
| $S_3 = (u_1, u_2)$ | 0.1942 | 0.1915 | 0.2368 | 0.3313 | 0.3997 |
| TOTAL | 0.8982 | 0.8858 | 0.8975 | 0.9460 | 1.0298 |

**Table 8: Test RMSE for Bibsonomy. User, tag, item, and feature are respectively denoted by** $u, t, i,$ **and** $f.$

| Dimensions | 5 | 10 | 20 | 30 | 40 |
|---|---|---|---|---|---|
| $S_1 = (u, t, i)$ | 0.3969 | 0.3828 | 0.3638 | 0.3493 | 0.3488 |
| $S_2 = (i, f)$ | 1.2660 | 1.5614 | 1.8116 | 1.5454 | 1.4703 |
| TOTAL | 1.0104 | 1.2309 | 1.4267 | 1.4190 | 1.1577 |

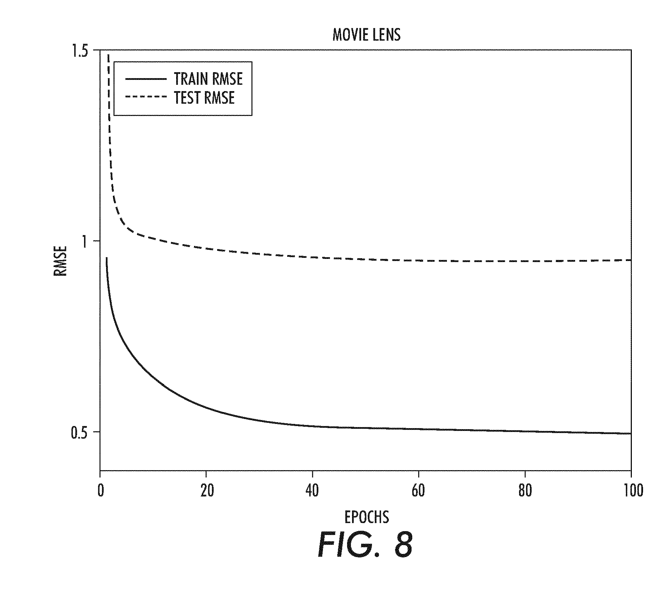

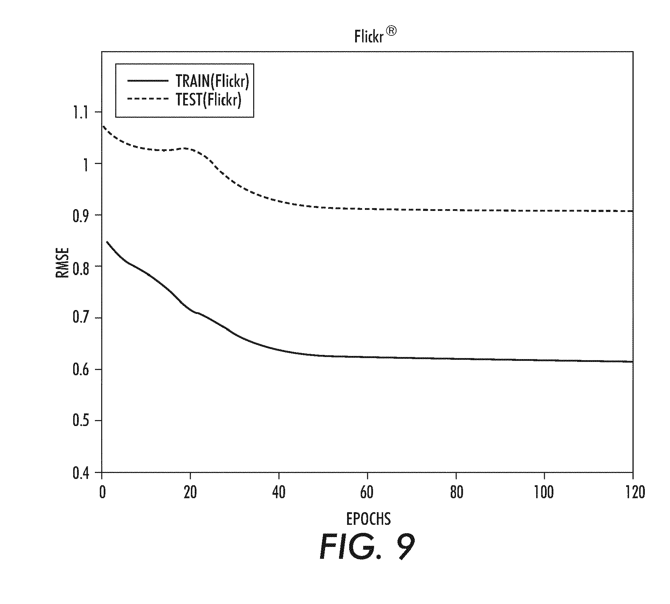

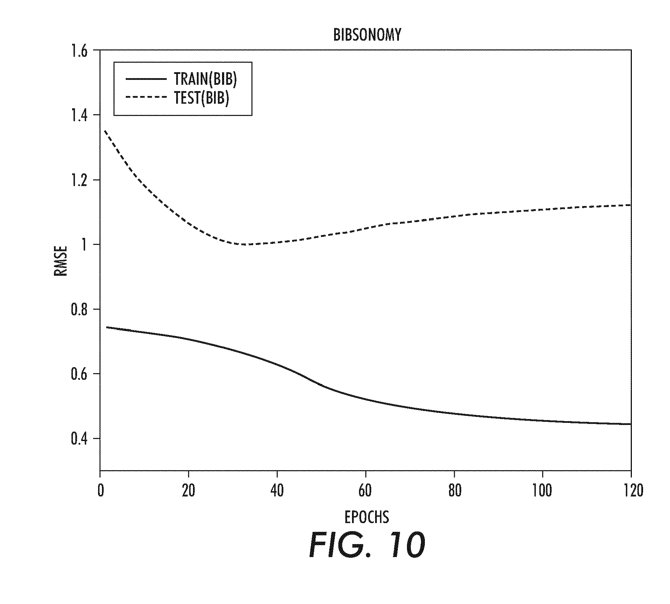

Another aspect to consider is the convergence of the SGD algorithm, which is used to learn the PRF model. On all data sets, the algorithms show convergence empirically. However, in some cases the RMSE as a function of epochs (i.e., number of passes over the training data) may exhibit overfitting. The training and test RMSEs for Flickr and Bibsonomy are respectively shown in FIGURES 8, 9, and 10. For FIGURES 8 and 9, RMSE for the training and test sets are consistent and are decreasing with increasing number of epochs. However, for FIGURE 10, the RMSE of the training set is continuously decreasing, while the RMSE on the test indicate overfitting after 40 epochs. This could be explained by the fact that for Bibsonomy the default setting of the hyperparameters is not appropriate.

One contemplated variant is to use more advanced factorization techniques. In the illustrative embodiments presented herein, the Parafac-Decomp formulation of tensor factorization was used, but other approaches such as Tucker decomposition (see L. Tucker, "Some mathematical notes on three-mode factor analysis", Psychometrika, 31:279-311, 1966) are also contemplated. Tucker decomposition enables a more flexible parameterization of the problem thanks to the use of relation-specific core tensors, and would also enable entity specific latent dimensions $D_1,...,D_k$ instead of the constant dimension $D$ used for all the entities in the illustrative examples set forth herein.

The performance of the probabilistic model is tied to the careful tuning of the hyper-parameter when the latent feature vectors $\Theta = (\Theta_1,...,\Theta_K)$ are estimated by maximize a posterior probability (MAP). When hyper-parameter are not well tuned, a point estimation such as MAP can be vulnerable to overfitting, especially when the data set is large and sparse.

Instead of using MAP estimation **16** to minimize the objective function $\mathcal{O}$, an alternative estimation scheme **18** is a fully Bayesian treatment, which integrates out all model parameters and hyper-parameters, arriving at a predictive distribution of future observations given observed data. Because this predictive distribution is obtained by averaging all models in the model space specified by the priors, it is less likely to over-fit a given set of observations.

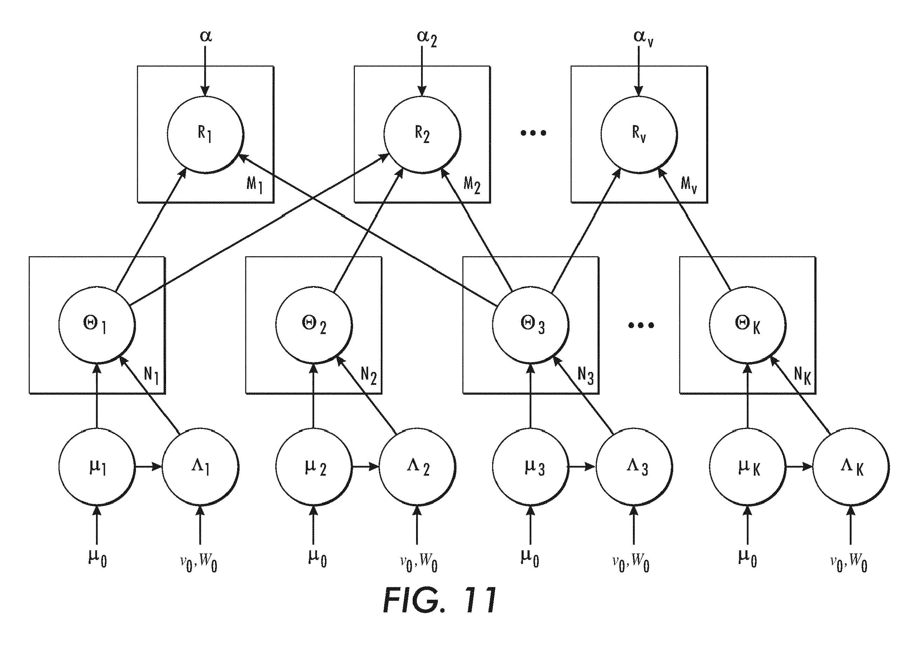

With reference to FIGURE 11, an illustrative Bayesian probabilistic multi-relational data model is graphically shown. As in the model of FIGURE 3, $R_1, ..., R_V$ are the $V$ observed relations, $\Theta_1, ..., \Theta_K$ are the latent features associated to the $K$ entity types, and $\alpha_1, ..., \alpha_v$ are the unobserved precisions (inverse variances) associated with the observed relations. In the Bayesian model of FIGURE 11, $u_1,...,u_K$ and $\Lambda_1,...,\Lambda_K$ are the unobserved means and variances, respectively, associated with the latent features. The observations are again assumed to follow a Gaussian distribution, although this assumption can also be relaxed to model other type of generalized linear model such as Poisson or Bernoulli distribution. For each observation $(v, \mathbf{i}, r) \in \mathcal{D}$, we have:

$$r|\Theta_\mathbf{i}: \mathcal{N}(\langle\mathbf{\Theta}_\mathbf{i}\rangle, \alpha_v), \qquad \text{where } (v, \mathbf{i}, r) \in \mathcal{D} \qquad (12)$$

The prior distribution for hidden feature $\Theta$ is assumed to be Gaussian too, but the mean and the precision matrix (inverse of the covariance matrix) may take arbitrary value:

$$\theta_{kj}: \mathcal{N}(\mu_k, \Lambda_k^{-1}), \quad j = 1 \ldots N_k \qquad (13)$$

An apect of the illustrative fully Bayesian treatment is to view the hyper-parameter $\Phi_k \equiv \{u_k, \Lambda_k\}$ also as random variable, leading to a predictive distribution for an unobserved rating $(v, \mathbf{i}, \hat{r})$ of:

$$p(\hat{r}|\mathcal{D}) = \int \int p(\hat{r}|\Theta_\mathbf{i}, \alpha_v)p(\Theta_\mathbf{i}, \alpha, \Phi_\mathbf{i}|\mathcal{D})d\{\Theta_\mathbf{i}, \alpha_v\}, d\{\Phi_\mathbf{i}\} \qquad (14)$$

For convenience, we also define $\Phi_\mathbf{i} = \{\Phi_{i_1}, \ldots \Phi_{i_{|S_v|}}\}$. We then choose the prior distribution for the hyper-parameters. For the gaussian parameter, we choose the conjugate distribution as priors that facilitate subsequent computation:

$$p(\alpha_v) = \mathcal{W}(\alpha_v|W'_0, v'_0)$$
$$p(\Phi_k) = p(\mu_k|\Lambda_k)p(\Lambda_k) = \mathcal{N}(\mu_0, (\beta_0\Lambda_k)^{-1})\mathcal{W}(\Lambda_k|W_0, v_0) \qquad (15)$$

Here W is the wishart distribution of a $D$ x D random matrix $\Lambda$ with $v_0$ degrees of freedom and a $D \times D$ scale $W_0$:

$$\mathcal{W}(\Lambda|W_0, v_0) = \frac{|\Lambda|^{(v_0-D-1)/2}}{C} \exp(-\frac{\mathrm{Tr}(W_0^{-1}\Lambda)}{2}) \qquad (15)$$

where C is a normalizing constant. There are several parameters in the hyperpriors: $\mu_0, \rho_0, \beta_0, W_0, v_0, W'_0, v'_0$, which reflect prior knowledge about the specific problem and can be treated as constants during training. In fact, Bayesian learning is able to adjust them according to the training data, and varying their values (within in a reasonably large range) has little impact on the final prediction, as often observed in Bayesian estimation procedures. See Xiong et al., "Temporal collaborative filtering with Bayesian probabilistic tensor factorization", In SIAM Data Mining, 2010.

One can represent the predictive distribution of the relation value r given observation $(v, \mathbf{i}, r) \in \mathcal{D}$ by marginalizing over model parameters:

$$p(\hat{r}|\mathcal{D}) = \int \int p(\hat{r}|\Theta_\mathbf{i}, \alpha_v)p(\Theta_\mathbf{i}, \alpha, \Phi_\mathbf{i}|\mathcal{D})d\{\Theta_\mathbf{i}, \alpha_v\}, d\{\Phi_\mathbf{i}\} \qquad (16)$$

In performing the Bayesian inference, often the exact predictive distribution is intractable, thus one relies on approximate inference such as sampling method based on Markov Chain Monte Carlo (MCMC). See Metropolis et al., "The Monte Carlo methods", JASA, 44 (247):335-341, 1949; Radford M. Neal, Probabilistic inference using Markov Chain Monte Carlo methods, 1993. For instance, MCMC can be used to approximate the predictive distribution of the following equation:

$$p(\hat{r}|\mathcal{D}) = \frac{1}{L}\sum_{l=1}^{L} p(\hat{r}|\Theta_{\mathbf{i}}^{(l)}) \qquad (17)$$

where the sample $\Theta_{\mathbf{i}}^{(l)}$ is generated by running a Markov chain whose stationary distribution is the posterior distribution over the model parameters and hyperparameter $\Theta$, $\Phi$.

One type of MCMC algorithm is Gibbs sampling. See Geman et al., "Stochastic relaxation, Gibbs distributions, and the Bayesian restoration of images", PAMI, 6(6):721-741, 1984. Gibbs sampling cycles through the latent variables, sampling each one from the conditional distribution given the current values of all other variables. Gibbs sampling is typically used when these conditional distributions can be sampled from easily. In the following, a derivation is given for the conditional distributions of model parameters and hyper-parameters, which are required for implementing Gibbs sampling. Note that with our model assumptions, the joint posterior distribution can be factorized as:

$$p(\Theta, \alpha, \Phi|\mathcal{D}) \propto \prod_{(v,\mathbf{i},r)\in\mathcal{D}} p(r|\theta_{S_{v1}i_1}, \ldots, \theta_{S_{v|S_v|}i_{|S_v|}}, \alpha_v)$$

$$\prod_k [p(\Theta_k|\Phi_k)p(\Phi_k)] \prod_v p(\alpha_v) \qquad (18)$$

We start with the derivation of the conditional distributions of the model hyper-parameters. For each $v$, $\alpha_v$ follows the Wishart distribution. By using the conjugate prior to $\alpha_v$, we have the conditional distribution of $\alpha_v$ given $R_v$, $\Theta$ following the Wishart distribution:

$$p(\alpha_v|\mathcal{D}_v, \Theta) = \mathcal{W}(\alpha_v|W_0^*, v_0^*) \qquad (19)$$

where $v_0^* = v'_0 + |\mathcal{D}_v|$ and:

$$(W_0^*)^{-1} = W'_0{}^{-1} + \sum_{(v,\mathbf{i},r)\in\mathcal{D}_v} (r - \langle\Theta_{\mathbf{i}}\rangle)^2. \qquad (20)$$

Next, we derive the conditional probability for $\Phi_k$. The graphical model (FIGURE 11) suggests that it is conditionally independent of all the other parameters given $\Theta_k$. We thus integrate out all the random variables except $\Theta_k$, and obtain the Gaussian-Wishart distribution:

$$p(\Phi_k|\Theta_k) = N(\mu_k|\mu_0^*, (\beta_0^*\Lambda_k)^{-1})\mathcal{W}(\Lambda_k|W_0^*, v_0^*), \qquad (21)$$

where:

$$\mu_0^* = \frac{\beta_0 \mu_0 + N_k \bar{\theta}_k}{\beta_0 + N_k}, \beta_0^* = \beta_0 + N_k, v_0^* = v_0 + N_k;$$

$$(W_0^*)^{-1} = W_0^{-1} + N_k \bar{S} + \frac{\beta_0 N_k}{\beta_0 + N_k}(\mu_0 - \bar{\theta}_k)(\mu_0 - \bar{\theta}_k)^T, \tag{22}$$

$$\bar{\theta}_k = \frac{1}{N_k}\sum_{j=1}^{N_k}\theta_{kj}, \bar{S} = \frac{1}{N_k}\sum_{j=1}^{N_k}(\theta_{kj} - \bar{\theta}_k)(\theta_{kj} - \bar{\theta}_k)^T.$$

The remaining conditional distributions are for model parameters $\Theta_k$, and we describe the derivation of these distributions in this section. According to the graphical model (FIGURE 11), its conditional distribution factorizes with respect to the individual entities:

$$p(\Theta_k|\mathcal{D}, \Theta_{-k}, \alpha, \Phi_k) = \prod_{j=1}^{N_k} p(\theta_{kj}|\mathcal{D}, \Theta_{-k}, \alpha, \Phi_k) \tag{23}$$

and

$$p(\theta_{kj}|\mathcal{D}, \Theta_{-k}, \alpha, \Phi_k) = \mathcal{N}(\theta_{kj}|\mu_{kj}^*, (\Lambda_{kj}^*)^{-1}) \tag{24}$$

where:

$$\mu_{kj}^* = (\Lambda_{kj}^*)^{-1}(\Lambda_k \mu_k + \sum_{v \in \{v'|k \in S_{v'}\}} \alpha_v \sum_{(v,\mathbf{i},r) \in \mathcal{D}_v, kj \in \mathbf{i}} r Q_{(v,\mathbf{i},r)})$$

$$\Lambda_{kj}^* = \Lambda_k + \sum_{v \in \{v'|k \in S_{v'}\}} \alpha_v \sum_{(v,\mathbf{i},r) \in \mathcal{D}_v, kj \in \mathbf{i}} Q_{(v,\mathbf{i},r)} Q_{(v,\mathbf{i},r)}^T \tag{25}$$

$$Q_{(v,\mathbf{i},r)} = \frac{\prod_{n=1}^{|S_v|} \theta_{S_{v,n}, i_n}}{\theta_{kj}}$$

Given these conditional probability for model parameters $\Theta$ and hyperparameters $\Phi$ and $\alpha$, the Gibbs sampler algorithms for the Bayesian probabilistic multi-relational data factorization graphical model (BPRA) are shown in Algorithm 2.

---

**Algorithm 2 Gibbs sampler for Relational Data Factorization**

---

**INPUT:** hyper-prior parameters $\{\mu_0, \rho_0, \beta_0, W_0, v_0, W_0', v_0'\}$
**OUTPUT:** model parameters $\{\Theta\}$

1: Initialize model parameters $\{\Theta^{(1)}\}$
2: **for** $l = 1, \ldots, L$, **do**
3:      Sample the hyper-parameters according to Eq. $\{19, 21\}$, respectively:

$$\alpha_v^{(l)} \sim p(\alpha_v | \mathcal{D}, \Theta^{(1)}) \quad \text{where } v = 1, \ldots, V$$

$$\Phi_k^{(l)} \sim p(\Phi_k | \mathcal{D}, \Theta_k^{(1)}) \quad \text{where } k = 1, \ldots, K$$

4:      Sample the model parameters in parallel
       according to Eq. 23:
5:      **for** $k = 1, \ldots, K$ **do**
6:        for regular factors

$$\theta_{kj}^{(l+1)} \sim p(\theta_{kj} | \mathcal{D}, \Theta_{1:k-1}^{(l+1)}, \Theta_{k+1:K}^{(l)}, \alpha^{(l)}, \Phi^{(l)})$$
$$\text{where } j = 1, \ldots, N_k \text{and } k \neq t$$

7:        for temporal factors $k = t$

$$\theta_{t1}^{(l+1)} \sim p(\theta_{k1} | \mathcal{D}, \Theta_{1:k-1}^{(l+1)}, \Theta_{k+1:K}^{(l)}, \theta_{t2}^{(l)}, \alpha^{(l)}, \Phi^{(l)})$$

$$\theta_{tj}^{(l+1)} \sim p(\theta_{k1} | \mathcal{D}, \Theta_{1:k-1}^{(l+1)}, \Theta_{k+1:K}^{(l)}, \theta_{tj-1}^{(l+1)}, \theta_{tj+1}^{(l)} \alpha^{(l)}, \Phi^{(l)})$$
$$\text{where } j = 2, \ldots, N_t - 1$$

$$\theta_{tj}^{(l+1)} \sim p(\theta_{k1} | \mathcal{D}, \Theta_{1:k-1}^{(l+1)}, \Theta_{k+1:K}^{(l)}, \theta_{tj-1}^{(l+1)}, \alpha^{(l)}, \Phi^{(l)})$$
$$\text{where } j = N_t$$

8:      end for
9: end for

---

Social media by nature are incremental processes. A number of data are temporally related. In the following, the temporal aspect of the data is considered, which is slightly different from a regular factor. Because we desire to capture the evolution of global trends by using the temporal factors, a reasonable prior belief is that they change smoothly over time. Therefore we further assume that each time feature vector depends only on its immediate predecessor. Here, we assume $t$ is the type of temporal factor among all K types, $t \in \{1,\ldots,K\}$, then:

$$\theta_{tj} : \mathcal{N}(\theta_{tj-1}, \Lambda_t^{-1}), \quad j = 2 \ldots N_t$$
$$\theta_{t1} : \mathcal{N}(\mu_t, \Lambda_t^{-1}) \tag{26}$$

and

$$p(\Phi_t) = p(\mu_t | \Lambda_t) p(\Lambda_t) = \mathcal{N}(\rho_0, (\beta_0 \Lambda_t)^{-1}) \mathcal{W}(\Lambda_t | W_0, v_0) \tag{27}$$

Next, we would like to derive the conditional probability for $\Phi_t$, i.e.:

$$p(\Theta_t|\Phi_t) = \mathcal{N}(\theta_{t1}|\mu_t, \Lambda_t^{-1}) \prod_{j=2}^{N_t} \mathcal{N}(\theta_{tj}|\theta_{tj-1}, \Lambda_t^{-1})$$ (28)

$$p(\Phi_t|\Theta_t) \propto p(\Theta_t|\Phi_t)p(\Theta_t)$$

The graphical model assumption suggests that it is conditionally independent of all the other parameters given $\Theta_t$. We thus integrate out all the random variables in Eq. 4, except $\Theta_t$. We obtain the Gaussian-Wishart distribution:

$$p(\Phi_t|\Theta_t) = N(\mu_t|\mu_0^*, (\beta_0^*\Lambda_t)^{-1})\mathcal{W}(\Lambda_t|W_0^*, v_0^*),$$ (29)

where:

$$\mu_0^* = \frac{\beta_0\rho_0 + \theta_{t1}}{\beta_0 + 1}, \beta_0^* = \beta_0 + 1, v_0^* = v_0 + N_t$$ (30)

and

$$(W_0^*)^{-1} = W_0^{-1} + \sum_{j=2}^{N_t} (\theta_{kj} - \theta_{kj-1})(\theta_{kj} - \theta_{kj-1})^T$$
$$+ \frac{\beta_0}{1 + \beta_0}(\theta_{k1} - \rho_0)(\theta_{k1} - \rho_0)^T,$$ (31)

We consider the the temporal features $\Theta_t$. According to the graphical model, its conditional distribution factorizes with respect to individual entities:

$$p(\Theta_t|\mathcal{D}, \Theta_{-t}, \alpha, \Phi_t) = \prod_{j=1}^{N_t} p(\theta_{tj}|\mathcal{D}, \Theta_{-t}, \alpha, \Phi_t)$$ (32)

$$p(\theta_{tj}|\mathcal{D}, \Theta_{-t}, \theta_{-j}, \alpha, \Phi_t) = \mathcal{N}(\theta_{tj}|\mu_{tj}^*, (\Lambda_{tj}^*)^{-1})$$

where for j = 1:

$$\mu_{t1}^* = (\Lambda_t^*)^{-1}(\Lambda_t(\mu_t + \theta_{t2}) + \sum_{v\in\{v\prime|t\in S_{v\prime}\}} \sum_{(v,\mathbf{i},r)\in\mathcal{D}_v, kj\in\mathbf{i}} \alpha_v rQ_{(v,\mathbf{i},r)})$$
$$\Lambda_{t1}^* = \Lambda_t + \sum_{v\in\{v\prime|t\in S_{v\prime}\}} \alpha_v \sum_{(v,\mathbf{i},r)\in\mathcal{D}_v, kj\in\mathbf{i}} Q_{(v,\mathbf{i},r)}Q_{(v,\mathbf{i},r)}^T$$ (33)

and for *j* = 2,...,*K* - 1:

$$\mu^*_{kj} = (\Lambda^*_{tj})^{-1}(\Lambda_t(\theta_{tj-1} + \theta_{tj+1}) + \sum_{v\in\{v\prime|t\in S_{v\prime}\}} \alpha_v \sum_{(v,\mathrm{i},r)\in\mathcal{D}_v,kj\in\mathrm{i}} rQ_{(v,\mathrm{i},r)})$$

$$\Lambda^*_{kj} = \Lambda_t + \sum_{v\in\{v\prime|t\in S_{v\prime}\}} \alpha_v \sum_{(v,\mathrm{i},r)\in\mathcal{D}_v,kj\in\mathrm{i}} Q_{(v,\mathrm{i},r)}Q^T_{(v,\mathrm{i},r)} \qquad (34)$$

and for j = *K*:

$$\mu^*_{kj} = (\Lambda^*_{tj})^{-1}(\Lambda_t\theta_{tj-1} + \sum_{v\in\{v\prime|t\in S_{v\prime}\}} \alpha_v \sum_{(v,\mathrm{i},r)\in\mathcal{D}_v,kj\in\mathrm{i}} rQ_{(v,\mathrm{i},r)})$$

$$\Lambda^*_{kj} = \Lambda_t + \sum_{v\in\{v\prime|t\in S_{v\prime}\}} \alpha_v \sum_{(v,\mathrm{i},r)\in\mathcal{D}_v,kj\in\mathrm{i}} Q_{(v,\mathrm{i},r)}Q^T_{(v,\mathrm{i},r)} \qquad (35)$$

$$Q_{(v,\mathrm{i},r)} = \frac{\prod_{n=1}^{|S_v|} \theta_{S_{v,n},i_n}}{\theta_{kj}}$$

Given these conditional probability for model parameters $\Theta$ and hyper-parameters $\Phi$ and $\alpha$. The Gibbs sampler algorithms for the Bayesian Probabilistic (multi-)Relational-data Analysis graphical model (BPRA) are shown in Algorithm 2.

In the following, empirical evaluations of the BPRA are reported on the already-described MovieLens, Flickr®, and Bibosonomy data sets. In addition to BPRA, the following additional methods were employed for comparison: (1) Probabilistic Matrix Factorization (PMF) in which independent collaborative filtering using probabilistic matrix factorization (see Salakhutdinov et al., "Probabilistic matrix factorization", in NIPS, pages 1257-1264, 2008), which treats activities independently; (2) Bayesian Probabilistic Matrix Factorization (BPMF) (see Salakhutdinov et al., "Bayesian probabilistic matrix factorization using Markov chain Monte Carlo", in ICML, pages 880-887, 2008); (3) Tensor Factorization (TF) which independently handles high-order relational data, e.g., tag prediction (see Rendle et al., "Learning optimal ranking with tensor factorization for tag recommendation", in SIGKDD, pages 727-736, 2009; Rendle et al., "Pairwise interaction tensor factorization for personalized tag recommendation", in WSDM, pages 81-90, 2010]); (4) Bayesian Probabilistic Tensor Factorization (BPTF) (see Xiong et al., "Temporal collaborative filtering with Bayesian probabilistic tensor factorization", in SIAM Data Mining, 2010) which models temporal collaborative filtering; and (5) Collective Matrix Factorization (CMF) (see Singh et al., "Relational learning via collective matrix factorization", in SIGKDD, pages 650-658, 2008) which handles the 2-order problem with multiple matrix factorization tasks. Performance of different methods are evaluated in terms of Root Mean Square Error (RMSE) based on the parameter setting that

$\mu_0,\ \rho_0,\ \beta_0, W_0,\ v_0,\ W_0',\ v_0'$ all equal to one or identity vector and D = 20 for the dimension of latent factors, on all three data sets. To this end, we study how the system performs when the model takes into account coupled relations.

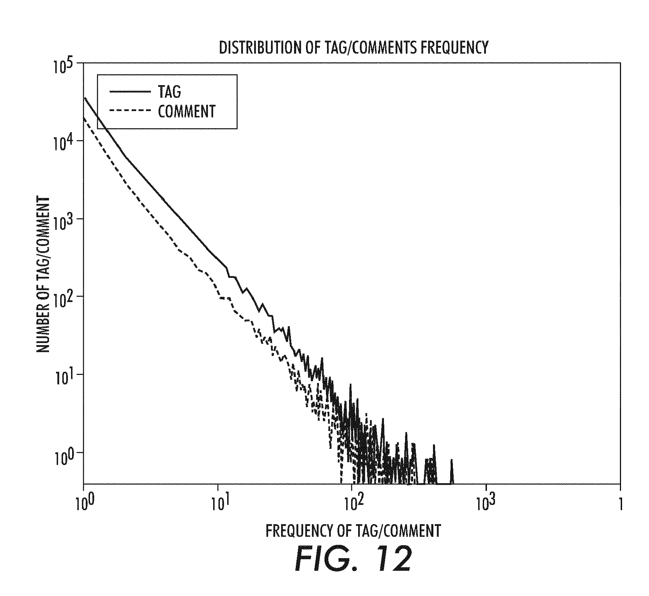

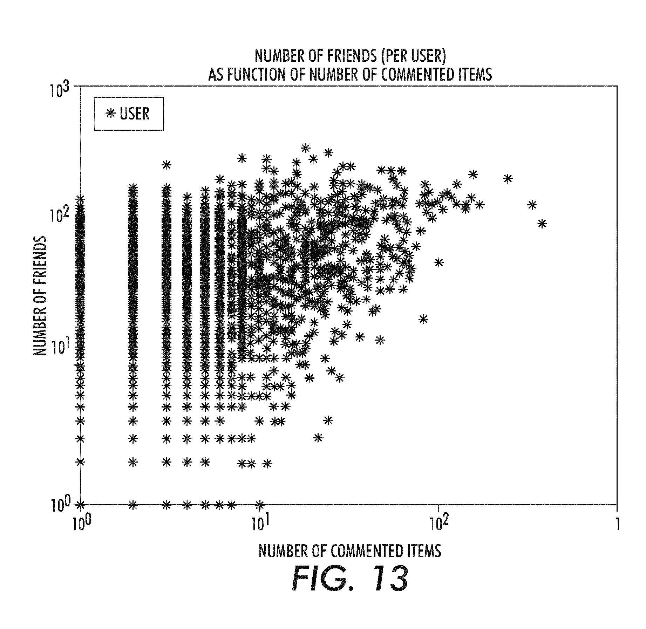

With reference to FIGURES 12 and 13, the Flickr® data set are first analyzed to investigate the distribution of tags and terms in the comments, and the connection between these relations. FIGURE 12 shows relation between the of number of tags/terms and the frequency of tags/terms in log scale. It is seen that the distributions over both tags and comment terms are similar and show two straight lines with the same slope in the log-scale plot. In the (user, comment, item) relation, among the 21,881 records where a user comments an item, 8,307 records show that the user also tags the same item, meaning if a user comments a item there will be around 1/3 chance that the user will also comment on that item. This evidence shows the strong connection between the relation (user, comment, item) and the relation (user, tag, item). FIGURE 13 shows the couplings between the user-user interaction and the commenting activity. From FIGURE 13, we can see that most users are located on the left-upper part, meaning users who comment more items usually have more friends. We also note that the reverse direction does not apply, that is, the users who have more friends may not comment frequently.

With reference to Table 9, prediction tests on the Flickr® data set are shown by tabulating the Root Mean Square Error (RMSE) for relations predicted using various methods. In Table 9, "PRA" employs the probabilistic multi-relational data model with MAP estimation, and "BPRA" with Bayesian estimation. The four relations are: C1=users tagging items (user, tag, item); C2=item content (item, feature); C3=social interaction (user, user); and C4=user's comments on item (user, item, comments). It is seen in Table 9 that the Bayesian method outperforms the MAP version. This is attributable to high data sparsity.

**Table 9: RMSE of four relations for Flickr® data set**

|     | BPRA | PRA | PMF | BPMF | TF | BPTF | CMF |
|-----|------|-----|-----|------|-----|------|-----|
| C1 | **0.3073** | 0.3599 | 0.9817 | N/A | 0.8226 | 0.352 | 0.5397 |
| C2 | 0.9215 | 0.9627 | 0.9913 | **0.9004** | N/A | N/A | 0.9438 |
| C3 | **0.1828** | 0.2053 | 0.1841 | 0.1878 | N/A | N/A | 0.1841 |
| C4 | **0.3478** | 0.3676 | 0.4471 | N/A | 0.4185 | 0.3593 | 0.4197 |
| C1 | 0.3449 | 0.445 | 0.9817 | N/A | 0.8226 | 0.352 | 0.5397 |
| C2 | 0.9198 | 0.963 | 0.9913 | 0.9004 | N/A | N/A | 0.9438 |
| C4 | 0.3516 | 0.3681 | 0.4471 | N/A | 0.4185 | 0.3593 | 0.4197 |
| C1 | 0.3177 | 0.3984 | 0.9817 | N/A | 0.8226 | 0.352 | 1.3569 |
| C3 | 0.1858 | 0.2298 | 0.1841 | 0.1878 | N/A | N/A | 0.1841 |
| C4 | 0.3482 | 0.4241 | 0.4471 | N/A | 0.4185 | 0.352 | 0.3743 |
| C1 | 0.3465 | 0.7843 | 0.9817 | N/A | 0.8226 | 0.3593 | 1.3569 |
| C4 | 0.353 | 0.3656 | 0.4471 | N/A | 0.4185 | 0.352 | 0.4185 |

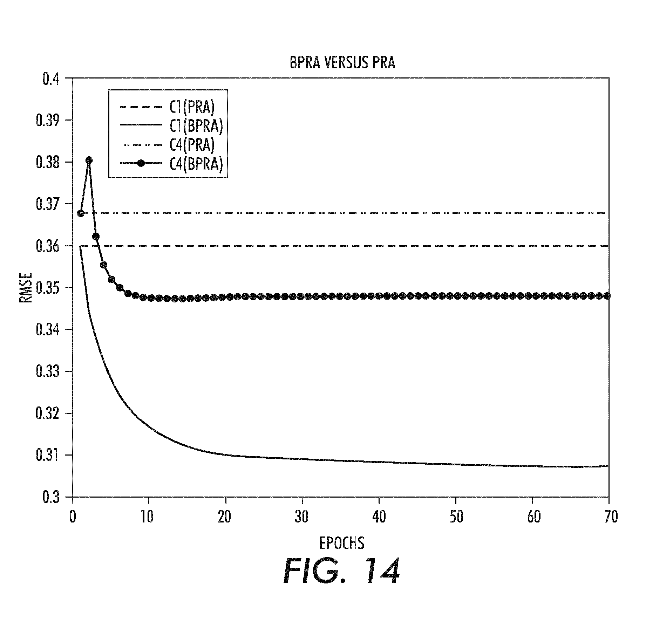

With reference to FIGURE 14, the convergence of the Bayesian model BPRA is shown, which starts sampling based on the results of PRA. It is seen that after around 50 epochs, the performance on two relations converge. In the following, we will use Bayesian version for analysis and comparison.

With returning reference to Table 9, the question of whether coupled relations actually lead to mutually improved prediction performance is investigated. Experiments were conducted on modeling different relations with several combinations to study this question. The first four rows of the Table 9 present results when all four relations C1, C2, C3, C4 are modeled together. Rows 5-7 present results when three relations C1, C2, C4 are modeled together. Rows 8-10 present results when three relations C1, C3, C4 are modeled together. Rows 11-12 present results when two relations C1, C4 are modeled together. Note however that "modeled together" is not actually meaningful for a technique such as Probabilistic Matrix Factorization (PMF) or Tensor Factorization (TF) which does not leverage dependencies between relationships, and so for example the PMF and TF data for a given relation is the same for all four experiments reported in rows 1-4, rows 5-7, rows 8-10, and rows 11-12 respectively.

When using BPRA or PRA which do leverage interdependencies, the results shown in Table 9 indicate that best performances are achieved for all four relations when modeling them together. Take the prediction of relation C1:(user, tag, item) using BPRA as an example. The best performance is 0.3073 in modeling all four relations. The performance is poorer at 0.3177 when modeling the three relations C1:(user, tag, item), C4:(user, comment, item) and C3:(user, user), and further degrades to 0.3465 when only modeling the two relations C1:(user, tag, item) and C4:(user, comment, item).

With continuing reference to Table 9, the evaluation of the disclosed BPRA and PRA models together with comparisons to other techniques (PMF, BPMF, TF, BPTF, and CMF) is discussed. Note that CMF can only model 2-order data, thus we drop the user factor in the reported experiments. For instance, CMF will only predict the tags on item $i$, instead of predicting the tags on item $i$ for user u. Similarly, in the relation (user-comment-tag) and (user-comment-item), CMF predicts comment-term only for items rather than for user and item pairs. For CMF, we also conduct experiments on the same combinations as in the previous section. For PMF, BPMF, PTF, and BPTF, their performance in different combinations remain unchanged since they are modeling a single relation. As seen in Table 9, PMF and PTF perform the worst in tag prediction, because they only model a single relation without encoding external information of items. Intuitively the external information of items (e.g., comments, features) is more critical to the tag prediction task. This result agrees estimates that over 90% of real-world cases are cold start problems. See Yin et al., "A probabilistic model for personalized tag prediction", in KDD, 2010. For the cold start problem, the external information of items are essential for tag prediction because the items do not exist in the training data. CMF performance in the tag prediction problem is better than PMF and PTF by incorporating item-comment and item-feature information. However, CMF cannot take into account higher-order data, thus it does not achieve a better performance in the comment context and tag context. Overall, it is seen that for all methods, Bayesian versions can always outperform the MAP version respectively, due to the sparsity of the data. The modeling disclosed herein outperforms all of PMF, PTF, BPMF, BPTF and CMF in the comments context, social network context and tag context. In the item feature relation, the modeling disclosed herein is slightly worse than BPMF. That is because the modeling disclosed herein attempts to maximize the likelihood for all relations. Checking the total RMSE for all four relations, it is found that the modeling disclosed herein outperforms the BPMF methods.

Results for the MovieLens data set are next considered. As previously noted, the time stamps for this data set are in a range April 2000 to February 2003. The temporal factor is based on Month, so the ratings fall into 35 month starting with April 2000 and ending with February 2003. Then we have three relations. The first relation is movie rating prediction for the relation (user, movie, time), the second relation is (user, profile), and the third relation is (movie, genre). For the first relation, we randomly selected 100,000 ratings as training data and the rest was test data. For the second and third relation, we randomly selected one out of every ten entries for testing and used the rest as training. The objective was not only to predict ratings, but also to predict unobserved user features and unobserved movie genres.

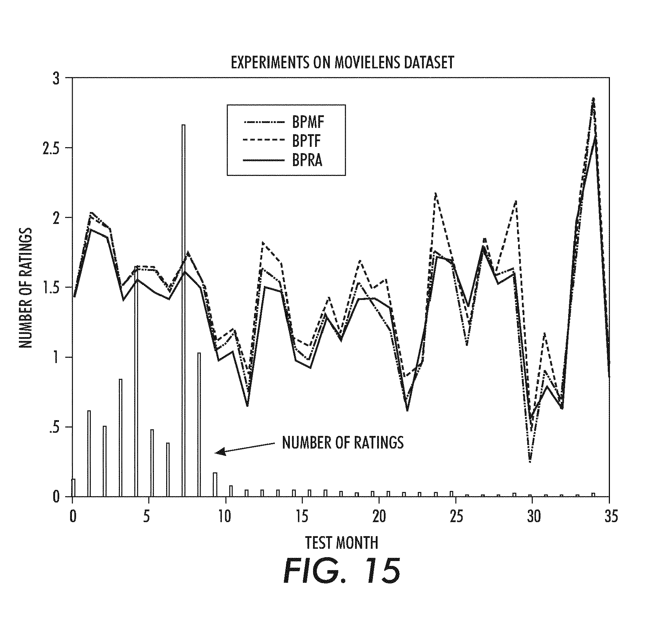

The results are shown in Table 10. The relations are: C1:(user, tag, item); C2:(user, profile); and C3:(movie, genre). Table 10 shows that the disclosed modeling clearly outperforms all other methods on all three relations. We also conduct a temporal analysis: for each month's data, we test the RMSE and the results are shown in FIGURE 15, where the green bar for each month shows the number of test ratings at that month, and the lines plot the RMSE of the three methods. It is seen that for all monthly data, the disclosed modeling can yield better results than BPMF. Comparing with BPTF, only at time 26 and 30, the performance of BPTF is better, but that time, the test rating is very few.

**Table 10: RMSE on the MovieLens data set.**

|    | BPRA       | PRA    | PMF    | BPMF       | TF     | BPTF   | CMF    |
|----|------------|--------|--------|------------|--------|--------|--------|
| C1 | **0.9258** | 1.7234 | 1.399  | 0.9468     | 1.7798 | 0.9394 | 1.3451 |
| C2 | **0.1877** | 0.267  | 0.266  | 0.1865     | N/A    | N/A    | 0.2673 |
| C3 | **0.2387** | 0.292  | 0.3463 | 0.2405     | N/A    | N/A    | 0.2752 |

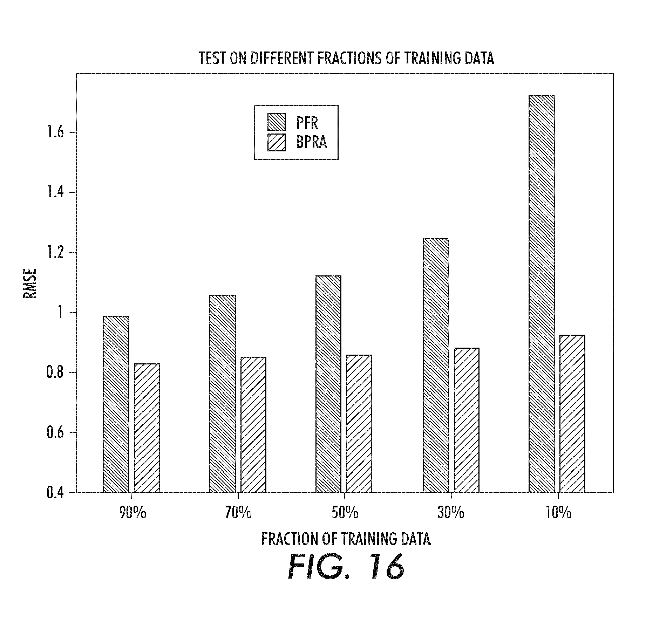

With reference to FIGURE 16, the question is considered as to when the training data become sparser, what is the change of the error for BPRA and PRA. As seen in FIGURE 16, as the fraction of training data changes from 90% to 10%, RMSE of PRA grows significantly; whereas, the RMSE of BPRA almost stays the same. This shows that the Bayesian treatment is more robust and handles sparse relational data effectively. With the fact that social network high order relational data are usually very sparse, full Bayesian treatment is seen to be advantageous.

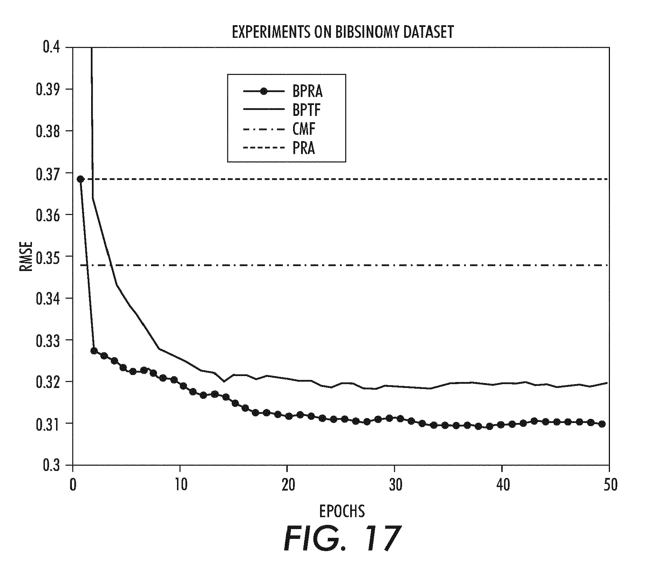

With reference to Table 11 and FIGURE 17, experiments on the Bibsonomy data set are next considered. In Table 11, the relations are: C1:(user,tag,item) for users tagging items, and C2:(item,feature) for item content. The first two data columns compare results for the disclosed probabilistic multi-relational data model employing Bayesian estimation (BPRA) and MAP estimation (PRA). It is again seen that BPRA provides superior performance as compared with PRA, benefiting from the handling of sparse data. Table 11 also compares the disclosed BPRA and PRA methods with PMF, BPMF, TF, BPTF, and CMF. It is seen that BPMF, BPTF outperform PMF and BPTF respectively. The experiments on this data set also verify the value of employing Bayesian treatment in social relational data.

**Table 11: RMSE on the Bibsonomy data set.**

|    | BPRA   | PRA    | PMF    | BPMF   | TF     | BPTF   | CMF    |
|----|--------|--------|--------|--------|--------|--------|--------|
| C1 | 0.3097 | 0.3484 | N/A    | N/A    | 1.0409 | 0.3455 | 0.3608 |
| C2 | 1.0118 | 1.0088 | 1.7387 | 1.1025 | N/A    | N/A    | 1.7848 |

BPTF almost fails to solve the task specified by C1:(user,tag,item) relation without item external information. On the contrary, CMF achieves better results on both relations due to combination of the two relations. The results are consistent with results for the Flickr data in that the disclosed modeling noticeably decreases the RMSE for the tag prediction task. Note that the performance for both relations can lead to significant improvements: 0.3097 in the (user, tag, item) relation and 1.0088 in the (item, feature) relation respectively. BPRA noticeably outperforms all other methods.

It will be appreciated that various of the above-disclosed and other features and functions, or alternatives thereof, may be desirably combined into many other different systems or applications. Also that various presently unforeseen or unanticipated alternatives, modifications, variations or improvements therein may be subsequently made by those skilled in the art which are also intended to be encompassed by the following claims.


**Claims**

1. A non-transitory storage medium storing instructions executable by an electronic data processing device to perform a method including:

    representing a multi-relational data set by a probabilistic multi-relational data model for *V* relations where *V* ≥ 2 and at least one relation of the *V* relations is a relation between at least three entity types and in which each entity of the multi-relational data set is represented by a *D*-dimensional latent feature vector; and

training by approximating Bayesian posterior probability distributions over the latent feature vectors that are assigned prior distributions based on a collection of observations, wherein the collection of observations include observations of the V relations, the training generating optimized D-dimensional latent feature vectors representing the entities of the multi-relational data set; and

generating a prediction for an observation of a relation $v \in V$ linking at least two entities of the multi-relational data set based on a dot-product of the optimized D-dimensional latent feature vectors representing the entities.

2. The non-transitory storage medium of claim **1,** wherein the training comprises:

optimizing the D-dimensional latent feature vectors to maximize likelihood of the collection of observations.

3. The non-transitory storage medium of claim **2,** wherein the optimizing includes minimizing a maximum a posteriori (MAP) estimator and
the MAP estimator is minimized using a stochastic gradient descent (SGD) algorithm.

4. The non-transitory storage medium of claim **2,** wherein the optimizing includes minimizing a maximum a posteriori (MAP) estimator $\mathcal{O} = -\log p(\mathcal{D}|\Theta, \alpha) -$ -log$p(\Theta|\sigma)$ where D is the collection of observations, $\Theta$ is the set of *D*-dimensional latent feature vectors representing the entities of the multi-relational data set, $\alpha$ is a set of unobserved precisions associated with the V relations, and $\sigma$ is a set of unobserved variances associated with the latent features.

5. The non-transitory storage medium of claim **2,** wherein the optimizing uses Gibbs sampling to optimize the D-dimensional latent feature vectors with respect to the collection of observations of relations between entities of the multi-relational data set.

6. The non-transitory storage medium of claim **1,** wherein the relation *v* between at least two entities of the multi-relational data set for which the prediction is generated is a relation between $S_v$ entity types, and the generating is based on the dot-product $\langle \theta_{i1}, ..., \theta_{iS_v} \rangle$ where $\theta_{i1}, ..., \theta_{iS_v}$ are the optimized D-dimensional latent feature vectors representing the $S_v$ entities of the observation for which the prediction is generated.

7. An apparatus comprising:

a non-transitory storage medium as set forth in claim **1**; and
an electronic data processing device configured to execute the instructions stored on the non-transitory storage medium.

8. A method performed in conjunction with a multi-relational data set represented by a probabilistic multi-relational data model in which each entity of the multi-relational data set is represented by a latent feature vector, the method comprising:

optimizing the latent feature vectors representing the entities of the multi-relational data set to maximize likelihood of a collection of observations of relations between entities of the multi-relational data set wherein the collection of observations include observations of at least two different relations with at least one relation being between at least three entity types, the optimizing generating optimized latent feature vectors representing the entities of the multi-relational data set; and
generating a prediction for an observation of a relation *v* between two or more entities of the multi-relational data set based on the optimized latent feature vectors representing the two or more entities;
wherein the optimizing and the generating are performed by an electronic data processing device.

9. The method of claim **8** wherein the optimizing comprises minimizing an objective function $\mathcal{O}$ comprising a linear combination of a log-likelihood term representing the likelihood of the collection of observations and a penalty term.

10. The method of claim **9** wherein the minimizing of the objective function $\mathcal{O}$ is performed using a stochastic gradient descent (SGD) algorithm.

**11.**

The method of claim **10,** wherein the objective function $\mathcal{O} = -\log p(\mathcal{D}|\Theta, \alpha) - \log p(\Theta|\sigma)$ where D is the collection of observations, $\Theta$ is the set of latent feature vectors representing the entities of the multi-relational data set, $\alpha$ is a set of unobserved precisions associated with the at least two different relations, and $\sigma$ is a set of unobserved variances associated with the latent features.

**12.** The method of claim **8** wherein the optimizing comprises performing Bayesian inference to optimize the latent feature vectors respective to the collection of observations of relations between entities of the multi-relational data set.

**13.** The method of claim **12** wherein the performing of Bayesian inference comprises performing Bayesian inference using Gibbs sampling.

**14.** The method of claim **8,** wherein:

the observations of the collection of observations of relations between entities of the multi-relational data set are time-stamped,
the latent feature vectors representing the entities of the multi-relational data set include latent features representing time-stamps of the multi-relational data set, and
the optimizing includes optimizing the latent feature vectors representing the time stamps of the multi-relational data set.

**15.** The method of claim **14,** wherein in the probabilistic multi-relational data model the latent feature vector representing each time-stamp depends only on the latent feature vector representing the immediately temporally preceding time-stamp in the collection of observations.

OBSERVATIONS $\mathcal{D}$ — 10

PARAMETERS ESTIMATION MODULE — 14

SET OF LATENT FEATURES $\Theta$ — 12

MAXIMUM A POSTERIORI (MAP) ESTIMATOR OBJECTIVE FUNCTION $O$ — 16

STOCHASTIC GRADIENT DESCENT (SGD) OPTIMIZATION ENGINE — 18

OPTIMIZED SET OF LATENT FEATURES $\Theta$ — 20

40

8

OBSERVATION OF A RELATION TO BE PREDICTED

30

COMPUTE DOT-PRODUCT OF LATENT FEATURE VECTORS REPRESENTING THE ENTITIES OF THE OBSERVATION TO BE PREDICTED — 32

28

PREDICTION FOR THE OBSERVATION — 34

FIG. 1

FIG. 2

FIG. 3

FIG. 4

*FIG. 5*

FIG. 6

FIG. 7

## MOVIE LENS

FIG. 8

*FIG. 9*

*FIG. 10*

FIG. 11

DISTRIBUTION OF TAG/COMMENTS FREQUENCY

TAG
COMMENT

NUMBER OF TAG/COMMENT

FREQUENCY OF TAG/COMMENT

*FIG. 12*

NUMBER OF FRIENDS (PER USER)
AS FUNCTION OF NUMBER OF COMMENTED ITEMS

*USER

NUMBER OF FRIENDS

NUMBER OF COMMENTED ITEMS

FIG. 13

FIG. 14

EXPERIMENTS ON MOVIELENS DATASET

NUMBER OF RATINGS

NUMBER OF RATINGS

TEST MONTH

*FIG. 15*

EP 2 738 716 A2

TEST ON DIFFERENT FRACTIONS OF TRAINING DATA

FIG. 16

EP 2 738 716 A2

FIG. 17

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 7214426 B
- US 1585179 A

### Non-patent literature cited in the description

- **YIN et al.** A probabilistic model for personalized tag prediction. *KDD,* 2010
- **PERRONNIN et al.** Fisher kernels on visual vocabularies for image categorization. *CVPR,* 2007
- Latent Dirichlet allocation. **BLEI et al.** Journal of Machine Learning Research. John Laffery, January 2003, vol. 3
- **L. TUCKER.** Some mathematical notes on three-mode factor analysis. *Psychometrika,* 1966, vol. 31, 279-311
- **XIONG et al.** Temporal collaborative filtering with Bayesian probabilistic tensor factorization. *SIAM Data Mining,* 2010
- **METROPOLIS et al.** The Monte Carlo methods. *JASA,* 1949, vol. 44 (247), 335-341
- **RADFORD M. NEAL.** *Probabilistic inference using Markov Chain Monte Carlo methods,* 1993
- **GEMAN et al.** Stochastic relaxation, Gibbs distributions, and the Bayesian restoration of images. *PAMI,* 1984, vol. 6 (6), 721-741
- **SALAKHUTDINOV et al.** Probabilistic matrix factorization. *NIPS,* 2008, 1257-1264
- **SALAKHUTDINOV et al.** Bayesian probabilistic matrix factorization using Markov chain Monte Carlo. *ICML,* 2008, 880-887
- **RENDLE et al.** Learning optimal ranking with tensor factorization for tag recommendation. *SIGKDD,* 2009, 727-736
- **RENDLE et al.** Pairwise interaction tensor factorization for personalized tag recommendation. *WSDM,* 2010, 81-90
- **SINGH et al.** Relational learning via collective matrix factorization. *SIGKDD,* 2008, 650-658